(19) Europäisches Patentamt European Patent Office Office européen des brevets

(11) **EP 1 840 884 A1**

(12) **EUROPEAN PATENT APPLICATION**

(43) Date of publication:
**03.10.2007 Bulletin 2007/40**

(51) Int Cl.:
*G11B 5/66* (2006.01)     *G11B 5/00* (2006.01)
*G11B 5/127* (2006.01)

(21) Application number: **06027124.4**

(22) Date of filing: **29.12.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **30.03.2006 JP 2006094477**

(71) Applicant: **Hitachi Global Storage Technologies B. V.**
**01 AZ Amsterdam (NL)**

(72) Inventors:
• **Nakagawa, Hiroyuki**
**Yokohama-shi**
**Kanagaw 226-0015 (JP)**
• **Takekuma, Ikuko**
**Yokohama-shi**
**Kanagaw 222-0033 (JP)**

(74) Representative: **Kirschner, Klaus Dieter**
**Kirschner Patentanwaltskanzlei**
**Sollner Strasse 38**
**81479 München (DE)**

(54) **Magnetic storage device**

(57)     A perpendicular magnetic recording medium and a shielded pole head are used. The shielded pole head comprises a single pole type writer having a main pole and an auxiliary pole, and a magnetic shield is provided via a non-magnetic gap layer so as to cover at least the down-track direction of trailing side of the main pole. The perpendicular magnetic recording medium has two recording layers. The first recording layer comprises ferromagnetic crystal grains having Co as principal component and containing at least Cr and Pt, and grain boundaries containing an oxide. The second recording layer comprises an alloy having Co as principal component, containing at least Cr, and not containing an oxide. The saturation magnetization $Ms1$ (kA/m) of the first recording layer, the saturation magnetization $Ms2$ (kA/m) of the second recording layer and the film thickness $ts$ (nm) of the soft-magnetic underlayer satisfy the following relation:

$$20+0.033*ts2+2.3*ts \leq 4/3*Ms1-Ms2 \leq 329-0.024*ts2+1.9*ts$$

**Fig.4**

47 : protective layer, overcoat
46 : second recording layer
45 : first recording layer
44 : underlayer which controls the crystal texture (of upper layer) and promotes the segregation (of upper layer)
43 : soft-magnetic underlayer
underlayer
42 : adhesion layer
41 : substrate

**Description**

This invention relates to a magnetic storage device which can record large amounts of information.

In recent years, the amount of information handled by computers has been increased and increase in the capacity of hard disk unit as an auxiliary recording device has been demanded further. Further, due to increasing installation of hard disk drive units in home electronic products, demand for decreasing the size and increasing the capacity of the hard disk unit has been increased more and more..

In the longitudinal magnetic recording system used for current magnetic disk units, magnetizations recorded on a medium are mutually opposite and adjacent to each other, so to increase linear recording density, the coercivity of the recording layer must be increased and film thickness must be decreased. However, if the coercivity of the recording layer increases, a problem arises in that the write-ability of the recording head is insufficient, and if the film thickness of the recording layer becomes thinner, a problem arises in that recording information is lost due to thermal fluctuation. Due to these problems, it is becoming difficult to increase the recording density in the longitudinal recording system. In order to solve these problems, the perpendicular magnetic recording system is now attracting attention. The perpendicular magnetic recording system is a method wherein recorded bits are formed so that the magnetizations of the recording medium are perpendicular to the medium surface, and the magnetizations of adjacent recorded bits are mutually anti-parallel. Since the demagnetizing field in a magnetic transition region is small compared with the longitudinal recording system, noise of the medium can be reduced, and the recording magnetization in high density recording can be maintained stable. Also, a double layered perpendicular magnetic recording medium having a soft-magnetic underlayer which is formed between the perpendicular magnetic recording medium and a substrate in order to be functioned as a return path for magnetic flux, has been proposed. This was intended to improve recording density by combination with a single-pole-type head (referred to hereafter as a single-pole-type writer or an SPT head) without a magnetic shield for increasing the write-field gradient.

As the magnetic recording layer in the perpendicular magnetic recording medium, a granular structure wherein the crystal grains are enclosed by nonmagnetic compounds, such as oxides or nitrides, has been proposed. For example, in JP-A 2002-342908, a recording layer having a CoCrPt alloy as principal component and containing oxides of Si, wherein the Si content is from 8 at.% to 16 at.% in terms of Si atoms, and which is deposited by sputtering in a chamber wherein the Ar gas pressure is 0.133Pa to 2.66Pa, is disclosed. Further, in IEEE Transactions on Magnetics, Vol.40, No.4, July 2004, pp.2498-2500, the "Role of Oxygen Incorporation in Co-Cr-Pt-Si-O Perpendicular Magnetic Recording Media", a method of forming a recording layer having a granular structure by DC magnetron sputtering in an argon-oxygen mixed gas and by using a composite target containing a CoCrPt alloy and $SiO_2$, is disclosed. The recording layer of Co-Cr-Pt-Si-O is formed via a Ta/Ru intermediate layer on a soft-magnetic underlayer of 160 nm thick Co-Ta-Zr, and it is reported that when the oxygen concentration in the recording layer is about 15%, the coercivity is a maximum, and read-write performances are improved.

The aim of these techniques is to increase recording characteristics by segregating the nonmagnetic oxides to the grain boundaries and magnetically isolating the magnetic grains. However, in order to satisfy both read-write performances and thermal stability, it is necessary to not only magnetically isolate the magnetic grains, but also increase the magnetic anisotropy of the magnetic grains, and there was then a problem that the coercivity increased too much and recording by the head became difficult.

In order to resolve this problem, a structure wherein a Co-Cr alloy layer which does not contain an oxide, is laminated on a recording layer of granular structure wherein oxides are segregated to the grain boundaries, has been proposed. For example, in JP-A 2004-310910, a perpendicular magnetic recording layer comprising a layer containing Co as principal component, containing Cr and not containing an oxide, and a layer containing Co as principal component, Pt and oxides, is disclosed. It is specified that the oxide amount in the layer containing the oxides, is preferably 3 mol% to 12 mol%, but more preferably 5 mol% to 10 mol%, relative to the total amount of Co, Cr and Pt. It is specified that if this range is exceeded, oxide remains in the magnetic grains, the crystal orientation of the magnetic grains is degraded, oxide is segregated above and below the magnetic grains and a columnar structure of the magnetic grains is degraded, which is undesirable. It is further specified that the film thickness of a soft-magnetic underlayer is preferably 50 to 400 nm, the saturation magnetic flux density of the soft-magnetic underlayer is 0.6 T or more, and the product Bs*t of the saturation magnetic flux density Bs (T) and film thickness t (nm) of the soft-magnetic underlayer is preferably 20 (T*nm) or more. In the embodiments, evaluation results show that by combining a perpendicular magnetic recording medium having a Co-Nb-Zr soft-magnetic underlayer of film thickness 100 nm with a single-pole-type head, overwrite (OW) performance is improved, and signal to noise (S/N) ratio also is improved.

In recent years, a perpendicular magnetic recording medium has been evaluated using a magnetic head whose writer have the conventional simple single-pole-type structure and, in addition, have a magnetic shield formed at least on the down-track direction of trailing side of the main pole via a nonmagnetic gap layer in order to increase the write-field gradient. Hereafter, this magnetic shield will be referred to as a trailing shield or simply shield, and the head provided with the trailing shield will be referred to as a shielded pole head or trailing shielded pole head. For example, US2002/0176214A1 or JP-A 2005-190518 disclose an example of a shielded pole head. The shielded pole head can increase the write-field gradient though the write-field intensity falls, and therefore if OW performance is satisfied, a high linear recording density may be achieved.

For example, in IEEE Transactions on Magnetics, Vol.41, No.10, October 2005, pp.3145-3147, "Anisotropy Enhanced Dual Magnetic Layer Medium Design for High-Density Perpendicular Recording", a medium comprising an antiferromagnetically coupled soft-magnetic underlayer of 90-nm-thcick, an intermediate layer wherein a Ru layer is laminated on Ta, and a perpendicular magnetic recording layer having a granular layer of Co-Cr-Pt-O and a layer of Co-Cr-Pt-B which does not contain an oxide, was evaluated with a shielded head. It is shown that the S/N ratio is improved by laminating the layer of Co-Cr-Pt-B having a saturation magnetization of about 340 kA/m on the granular layer of Co-Cr-Pt-O having a saturation magnetization of about 300 kA/m.

When a perpendicular magnetic recording medium having a structure wherein a CoCr alloy layer not containing an oxide was laminated with a CoCrPt alloy layer containing oxides, was evaluated with a single pole type head, even though OW performace was improved, the linear recording density could not be much increased.

If a shielded pole head is used instead of a single pole type head, the write-field gradient increases, and an improvement in linear recording density can therefore be expected. If the soft-magnetic underlayer is thick, the linear recording density does improve compared with a single pole type head, but the improvement is not sufficient, and it is difficult to increase the track pitch density simultaneously due to side writing in the cross-track direction. It was found that if the soft-magnetic underlayer is simply made thinner, side writing in the track direction is suppressed and a sufficiently narrow write width for high density recording is obtained, but linear recording density falls due to deterioration of OW performance, and as a result, it is difficult to increase the areal recording density.

It is therefore an object of the present invention, which was conceived in view of the above problems, to provide a magnetic storage device in which higher-density recording than before is possible by using a perpendicular magnetic recording medium which shows good read-write performances in combination with a shielded pole head.

The magnetic storage device of the invention uses a combination of a perpendicular magnetic recording medium and a shielded pole head. The shielded pole writer has a single pole type writer structure comprising a main pole and an auxiliary pole and, in addition, has the magnetic shield formed via a nonmagnetic gap layer so as to cover at least the down-track direction of trailing side of the main pole. The perpendicular magnetic recording medium is a perpendicular magnetic recording medium having a soft-magnetic underlayer, an underlayer to control the crystallographic texture and to promote segregation formed on the soft-magnetic underlayer, a first recording layer which is formed on the underlayer to control crystallographic texture and to promote segregation and is composed of ferromagnetic crystal grains having Co as principal component and containing Cr and Pt and composed of grain boundaries containing oxides, and a second recording layer of an alloy having Co as principal component, containing Cr but not containing an oxide, formed on the first recording layer. The saturation magnetization Ms1 (kA/m) of the first recording layer, saturation magnetization Ms2 (kA/m) of the second recording layer and the film thickness ts (nm) of the soft-magnetic underlayer (nm) satisfy the following relation:

$$20+0.033*ts2+2.3*ts \leq 4/3*Ms1-Ms2 \leq 329-0.024*ts2+1.9*ts$$

The perpendicular magnetic recording medium does not necessarily need to have a soft-magnetic underlayer. In the case of a perpendicular magnetic recording medium without a soft-magnetic underlayer, the saturation magnetization Ms1 (kA/m) of the first recording layer and saturation magnetization Ms2 (kA/m) of the second recording layer satisfy the following relation:

$$20 \leq 4/3*Ms1-Ms2 \leq 329$$

In order to realize low noise, the first recording layer must have a structure wherein the oxides are segregated to the grain boundaries. In a recording layer with such a structure, generally due to grain diameter dispersion and magnetic anisotropy dispersion, dispersion of the magnetic field intensity when magnetization reversal occurs (hereafter, referred to as switching field distribution) is large. If the switching field distribution is large, formation of a sharp magnetic transition will become difficult and noise will increase. To reduce the switching field distribution, it is effective to adopt a structure wherein a second recording layer that uses Co as principal component, contains Cr and excludes oxide is laminated. The second recording layer has a uniform film structure with indistinct grain boundaries, and there is strong intergranular exchange coupling.

The exchange coupling in the film in-plane direction in this second recording layer functions to reduce the switching field distribution of the total recording layers, including that of the first recording layer. The reduction of the switching field distribution is more pronounced, the stronger this exchange coupling which results from larger saturation magnetization Ms2 of the second recording layer is, but on the other hand the domain wall motion during the recording process tends to become dominant, and this leads to an increase in noise. In order to suppress this domain wall motion, it is important to make the structure wherein the oxides of the first recording layer are segregated to the grain boundaries, function as a pinning site. This pinning energy is correlated with the saturation magnetization Ms1 of the first recording layer, the pinning force being stronger, the larger Ms1 is.

The Inventors found that, to obtain a perpendicular magnetic recording medium having outstanding read-write performances, the balance between the suppression of the domain wall motion by the pinning of the first recording layer and reduction of the switching field distribution by the second recording layer may be important.

Also, the saturation magnetizations Ms1, Ms2 of the first recording layer and second recording layer function to vary the magnetic field intensity (hereafter, switching field intensity) at which magnetization reversal occurs. If Ms1 is increased, the magnetic anisotropy energy of each grain will become larger and the switching field intensity of the recording layer will become larger. On the other hand, if Ms2 is increased, the intergranular exchange coupling will become stronger, so the switching field intensity becomes smaller. By matching this switching field intensity with the write-field intensity at which the write-field gradient increases, a sharp magnetic transition can be formed onto the medium, and high density recording can be realized. In other words, it was found that when Ms1 is increased, a relation between Ms1 and Ms2 such that Ms2 also increased, was important.

In order to determine the relation between Ms1 and Ms2, it is necessary to know the write-field intensity. As a result of examining read-write performances by combining various media with various heads, it was found that when a shielded head was used for recording, the relation between write-field intensity and write-field gradient strongly depends on the film thickness of the soft-magnetic underlayer.

If the film thickness ts of the soft-magnetic underlayer is as much as 100 nm, since the write-field intensity is large, side writing occurs in the cross-track direction and the track pitch density falls. Since the write-field intensity at which the maximum write-field gradient is obtained is also large, if Ms2 is relatively small and the switching field intensity of the recording layer is large, this switching field intensity well matches the write-field intensity at which the maximum write-field gradient is obtained. However, since the switching field distribution of the recording layer is not so small, the linear recording density cannot be increased and as a result, the areal recording density falls.

If ts is made as small as 60 nm or less, the (maximum) write-field intensity and the write-field intensity at which the maximum write-field gradient is obtained, will become small. Hence, when the switching field intensity of the recording layer is made small using a second recording layer of large Ms2, this switching field intensity well matches the write-field intensity at which the maximum write-field gradient is obtained. At that time, since the switching field distribution of the recording layer is also suppressed small, a sharp magnetic transition can be formed and linear recording density can be greatly increased. If the write-field intensity matches the switching field intensity of the recording layer due to the write-field intensity of the shielded head becoming smaller, side writing in the cross-track direction can be suppressed and the track pitch density can be increased. As a result, a high areal recording density can be achieved.

If ts is made as small as 30 nm or less, or when the soft-magnetic underlayer is not used, the (maximum) write-field intensity and the write-field intensity at which the maximum write-field gradient is obtained, fall. Hence, by further increasing Ms2, lowering the switching field intensity of the recording layer and making the switching field distribution smaller, a higher areal recording density can be realized.

As a result of combining various perpendicular magnetic recording media and shielded pole heads and evaluating recording reproduction characteristics, the aforesaid relation between the saturation magnetization Ms1 of the first recording layer, saturation magnetization Ms2 of the second recording layer and the film thickness ts of the soft-magnetic underlayer, was found. By combining the perpendicular magnetic recording medium and shielded pole head which satisfy this relation, matching is obtained between the write-field intensity at which the shielded pole head shows the maximum write-field gradient, and the switching field intensity of the total recording layers. Moreover, since the switching field distribution of the recording layer can be made small, a high S/N ratio and narrow track width can be realized. As a result, a high linear recording density and high track pitch density can be realized, and the areal recording density can be greatly increased.

In order to obtain the saturation magnetization of the first recording layer and the second recording layer that were mentioned above, the Cr concentration contained in the first recording layer and the second recording layer must be selected. If C1 (at.%) is the Cr concentration relative to the total amount of Co, Cr and Pt contained in the first recording layer, C2 (at.%) is the Cr concentration relative to the total amount of Co, Cr and Pt when Pt is contained in the second recording layer, and ts (nm) is the film thickness of the soft-magnetic underlayer, the following relation must be satisfied:

$$-1.0+0.00084*ts2+0.059*ts \leq C2-1.02*C1 \leq 6.9-0.00061*ts2+0.049*ts$$

When there is no soft-magnetic underlayer, the following relation for ts=0 must be satisfied:

$$-1.0 \leq C2 - 1.02*C1 \leq 6.9$$

As the first recording layer having Co as principal component, containing at least Cr and Pt and containing an oxide, a granular film of a Co-Cr-Pt-B alloy, Co-Cr-Pt-Mo alloy, Co-Cr-Pt-Nb alloy, Co-Cr-Pt-Ta alloy, oxides of Si, oxides of Ta, oxides of Nb or oxides of Ti can be used. By making the oxide content contained in the first recording layer 16 mol% to 25 mol%, and segregating these oxides to the grain boundaries, a granular layer of low noise can be formed. For example, when the first recording layer comprises the elements Co, Cr, Pt, the sum of the concentrations (at.%) of Si and O in all the elements is 16 at.% to 25 at.%. Below the aforesaid range, noise increases because the formation of grain boundaries becomes insufficient, while above the aforesaid range, magnetic anisotropy deteriorates greatly because some of the oxides remain in the crystal grains and thermal stability deteriorates, which are undesirable. The film thickness of the first recording layer may be set within limits such that the thermal stability is satisfied, and usually, a value of about 8 nm to 18 nm is used. If the Cr concentration C1 of the first recording layer has a value of about 6 at.% to 18 at.%, both low noise property and thermal stability can be obtained, which is preferred. If the saturation magnetization Ms1 of the first recording layer has a value of about 300 kA/m to 650 kA/m, both low noise property and thermal stability can be obtained, which is preferred. If the Pt concentration relative to the total amount of Co, Cr and Pt contained in the first recording layer has a value of about 15 at.% to 30 at.%, sufficient magnetic anisotropy can be obtained and sufficient thermal stability can be obtained.

The material of the layer which has Co as principal component, contains at least Cr and does not contain an oxide, which constitutes the second recording layer, may be a Co-Cr alloy, Co-Cr-B alloy, Co-Cr-Mo alloy, Co-Cr-Nb alloy, Co-Cr-Ta alloy, Co-Cr-Pt-B alloy, Co-Cr-Pt-Mo alloy, Co-Cr-Pt-Nb alloy or a Co-Cr-Pt-Ta alloy. The film thickness of the second recording layer may be set within a range in which the switching field distribution can be reduced and the thermal stability is satisfied. Usually, a value of about 4 nm-12 nm is used.

The material of the soft-magnetic underlayer may be a FeCoTaZr alloy, FeCoTaZrCr alloy, CoTaZr alloy, CoTaZrCr alloy, FeCoB alloy, FeCoCrB alloy, CoNbZr alloy or CoTaNb alloy. When the film thickness of the soft-magnetic underlayer is as thick as 100 nm, in order to realize a high throughput, the soft-magnetic underlayer must be formed by plural chambers, but by satisfying the aforesaid relation, the film thickness of the required soft-magnetic underlayer can be greatly reduced without sacrificing recording density, and the number of chambers required for forming the soft-magnetic underlayer can be reduced by half. As a result, the perpendicular magnetic recording medium can be formed even with an existing sputtering apparatus, and productivity can be greatly improved. Also, it was found that by making the soft-magnetic underlayer thin, the mechanical strength of the magnetic recording medium was improved and the reliability of shock resistance could be enhanced.

The underlayer which controls orientation and segregation (orientation control segregation promotion layer), controls the crystal orientation and crystal grain size of the recording layer, and has the important function of reducing the exchange coupling between the crystal grains of the recording layer. The film thickness, structure and material of the orientation control segregation promotion layer may be set within a range in which the aforesaid effect is obtained. For example, a structure in which a Ru or Ru alloy layer is formed on an nanocrystalline layer such as Ta, an amorphous layer such as NiTa, or a metal layer having a face-centered cubic lattice (fcc) structure, can be used.

The function of the nanocrystalline layer such as Ta, amorphous layer such as NiTa or metal layer having a face-centered cubic lattice (fcc) structure, is to improve the c-axis orientation, which is perpendicular to the film plane, of Ru. In particular, fcc metals are superior to nanocrystalline materials such as Ta or amorphous materials such as NiTa in terms of the control of grain size and roughness, and since they promote segregation and increase the thermal stability of the recording layer greatly, they are preferred. Examples of a metal having a face-centered cubic lattice (fcc) structure are Pd, Pt, Cu, Ni, or alloys thereof. In particular, an alloy having Ni as principal component, and containing at least W, Cr, V, or Cu, forms a suitable grain size and roughness, and promotes segregation of the recording layer, which is preferred. For example, Ni-6at.%W alloy, Ni-8at.%W alloy, Ni-6at.%V alloy, Ni-10at.% Cr alloy and Ni-10at.%Cr-3at. %W alloy, Ni-10at.%Cr-3at.%Nb alloy, Ni-10at.%Cr-3at.%B alloy, Ni-20at.%Cu alloy, Ni-20at.%Cu-3at/%W alloy, Ni-20at.%Cu-3at.%Ti alloy and Ni-20at.%Cu-3at.%Ta alloy, may be used. The film thickness usually has a value of about 2 nm to 12 nm.

The (111) orientation of the fcc layer can be increased by providing an amorphous layer, such as Cr-Ti alloy, Cr-Ta alloy, Ni-Ta alloy or Al-Ti alloy directly under the fcc metal, which is preferred. The film thickness usually has a value of about 1 nm to 5 nm.

If the shielded pole head used for the magnetic storage device of the invention has a single-pole-type writer with a main pole and an auxiliary pole and, in addition, has magnetic shields formed so as to cover the cross-tack sides and down-track direction of trailing side of the main pole via a nonmagnetic gap layer (referred to hereafter as a trailing and side-shielded head, wraparound shielded head or WAS head), side-writing can be further suppressed and track pitch density increased, which is more preferred.

According to the invention, since side writing in the cross-track direction can be suppressed and the bit error rate can be reduced, a magnetic storage device in which higher density recording than in the prior art is possible, can be provided. Adjacent track erasure can be suppressed, and a magnetic storage device having sufficient write-ability for data recording and erasure can easily be made available for practical use. Also, by making the soft-magnetic underlayer thin, the mechanical strength of the perpendicular magnetic recording medium can be increased, and a highly reliable magnetic storage device can be provided.

Some embodiments of the invention will now be described, referring to the drawings.

FIG. 1 is a cross-sectional schematic view of one embodiment according to the invention.

FIG. 2 is a schematic view showing the relation between a magnetic head and a magnetic recording medium.

FIG. 3 is a schematic view of a writer of a magnetic head viewed from an ABS surface. (a) is a trailing and side-shielded head, (b) is a trailing shielded pole head, and (c) is a conventional single pole type head without a shield.

FIG. 4 is a schematic view of a cross-sectional structure showing one aspect of a perpendicular magnetic recording medium according to the invention.

FIG. 5 is a diagram showing a Kerr loop of a double layered perpendicular magnetic recording medium having a soft-magnetic underlayer after correction, and the definition of saturation magnetization (Hs).

FIG. 6 is a diagram showing the dependence of the medium, coercivity, nucleation field, saturation field, and difference between saturation field and coercivity of media with a first recording layer having a saturation magnetization of 410 kA/m, on the saturation magnetization of a second recording layer.

FIG. 7(a) is a diagram showing the dependence of the linear recording density of a medium on the saturation magnetization of the second recording layer when the saturation magnetization of the first recording layer is 410 kA/m.

FIG. 7(b) is a diagram showing the dependence of the track pitch density of a medium on the saturation magnetization of the second recording layer when the saturation magnetization of the first recording layer is 410 kA/m.

FIG. 7(c) is a diagram showing the dependence of the areal recording density of a medium on the saturation magnetization of the second recording layer when the saturation magnetization of the first recording layer is 410 kA/m.

Fig. 8 is a diagram showing a relation found between the film thickness of a soft-magnetic underlayer and the saturation magnetization of the second recording layer, when the saturation magnetization of the first recording layer is 410 kA/m.

FIG. 9(a) is a schematic view showing a relation between a magnetic head and a magnetic recording medium.

FIG. 9(b) is a schematic view showing a relation between a magnetic head and a magnetic recording medium.

FIG. 9(c) is a schematic view showing a relation between a magnetic head and a magnetic recording medium.

FIG. 9(d) is a schematic view showing a relation between a magnetic head and a magnetic recording medium.

FIG. 9(e) is a schematic view showing a relation between a magnetic head and a magnetic recording medium.

FIG. 10 is a diagram showing the dependence of a normalized scratch depth on a soft-magnetic underlayer.

FIG. 11 is a diagram showing the dependence of the medium, coercivity, nucleation field, saturation field, and difference between saturation field and coercivity of media with the first recording layer having a saturation magnetization of 470 kA/m, on the saturation magnetization of the second recording layer.

FIG. 12(a) is a diagram showing the dependence of the linear recording density of a medium on the saturation magnetization of the second recording layer when the saturation magnetization of the first recording layer is 470 kA/m.

FIG. 12(b) is a diagram showing the dependence of the track pitch density of a medium on the saturation magnetization of the second recording layer when the saturation magnetization of the first recording layer is 470 kA/m.

FIG. 12(c) is a diagram showing the dependence of the areal recording density of a medium on the saturation magnetization of the second recording layer when the saturation magnetization of the first recording layer is 470 kA/m.

Fig. 13 is a diagram showing a relation found between the film thickness of the soft-magnetic underlayer and the saturation magnetization of the second recording layer, when the saturation magnetization of the first recording layer is 470 kA/m.

FIG. 14 is a diagram showing the dependence of the normalized scratch depth on a soft-magnetic underlayer.

FIG. 15 is a diagram showing the dependence of the medium, coercivity, nucleation field, saturation field, and difference between saturation field and coercivity of a first recording layer having a saturation magnetization of 530 kA/m, on the saturation magnetization of a second recording layer.

FIG. 16(a) is a diagram showing the dependence of the linear recording density of a medium on the saturation magnetization of the second recording layer when the saturation magnetization of the first recording layer is 530 kA/m.

FIG. 16(b) is a diagram showing the dependence of the track pitch density of a medium on the saturation magnetization of the second recording layer when the saturation magnetization of the first recording layer is 530 kA/m.

FIG. 16(c) is a diagram showing the dependence of the areal recording density of a medium on the saturation magnetization of the second recording layer when the saturation magnetization of the first recording layer is 530 kA/m.

Fig. 17 is a diagram showing a relation found between the film thickness of the soft-magnetic underlayer and the saturation magnetization of the second recording layer, when the saturation magnetization of the first recording layer is 530 kA/m.

FIG. 18 is a diagram showing the relation found between the film thickness ts of the soft-magnetic underlayer, a saturation magnetization Ms1 of the first recording layer and a saturation magnetization Ms2 of the second recording layer.

FIG. 19 is a diagram showing the relation found between the film thickness ts of a soft-magnetic underlayer, a Cr concentration C1 of the first recording layer and a Cr concentration C2 of the second recording layer.

FIG. 20 is a diagram showing the dependence of the normalized scratch depth on a soft-magnetic underlayer.

FIG. 21 is a diagram showing the relation found between the film thickness ts of the soft-magnetic underlayer, a saturation magnetization Ms1 of a first recording layer and a saturation magnetization Ms2 of a second recording layer.

FIG. 22 is a diagram showing the relation found between the film thickness ts of the soft-magnetic underlayer, the Cr concentration C1 of the first recording layer and the Cr concentration C2 of hte second recording layer.

FIG. 23 is a diagram showing the results of an evaluation of areal recording density of a medium without a soft-magnetic underlayer with a WAS head, TS head, SPT head and RING head.

Embodiment 1

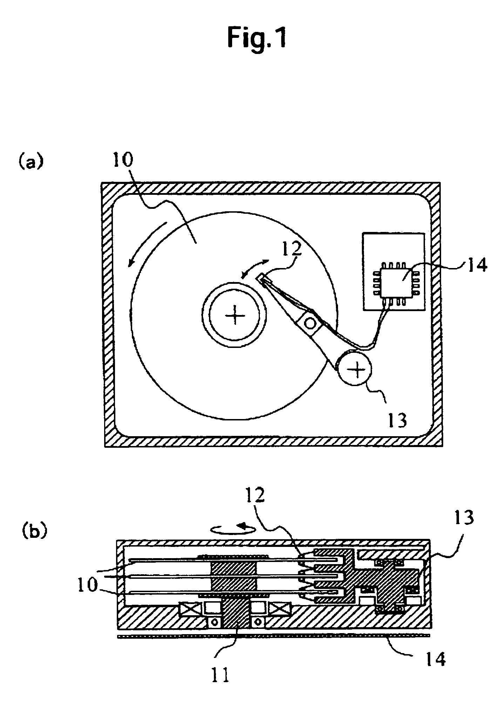

FIG. 1 is a schematic diagram showing one embodiment of a magnetic storage device according to the invention.

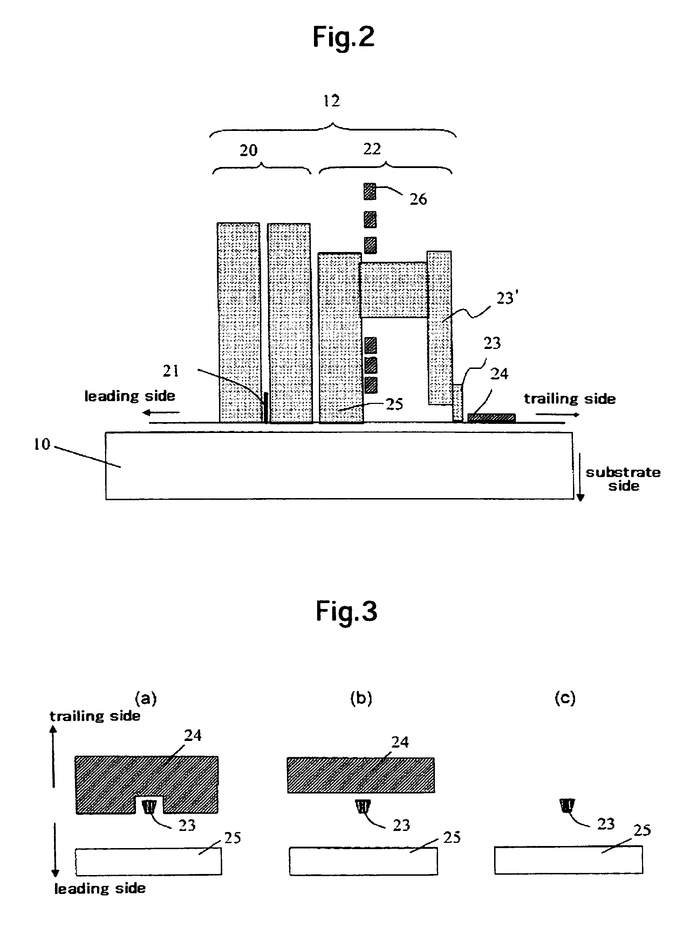

This magnetic storage device has perpendicular magnetic recording media 10, an actuator 11 which drives the perpendicular magnetic recording media, magnetic heads 12 comprising a writer and a reader, a means 13 which moves the magnetic heads relative to the magnetic recording medium, and a means 14 for processing an input signal and output signal to and from the magnetic heads. FIG. 2 shows the relation between the magnetic head 12 and the perpendicular magnetic recording medium 10. The magnetic flying height of the magnetic head is 8nm. A reader 20 has a read element 21 sandwiched by a pair of magnetic shields, a giant magnetoresistive element (GMR) being used for the read element 21. Apart from the giant magnetoresistive element, the read element 21 may be a tunneling magnetoresistive element (TMR) or a current-perpendicular-to-plane giant magnetoresistive element (CPP-GMR). A writer 22 has a single-pole-type writer comprising a main pole, auxiliary pole 25 and thin film conductor coil 26. The main pole comprises a main pole yoke 23' and a main pole tip 23, and a shield 24 is formed so that the cross-track sides and down-track direction of trailing side of the main pole tip 23 are covered.

FIG. 3(a) is a view of the writer of this trailing and side-shielded head (wraparound shielded head, WAS head) from an ABS surface. The geometric track width of the main pole tip is usually about 80-150 nm, and here it was 100 nm. The distance between the main pole and the trailing shield is usually about 40-150 nm, and here it was 50 nm. The distance between the main pole and the side shields may be about 40-200 nm, and here it was 100 nm. The height of the shield 24 is usually 50-250 nm, and here it was 100 nm. The geometric track width of the read element 21 using the giant magnetoresistive effect is usually about 60-100 nm, and here it was 70 nm.

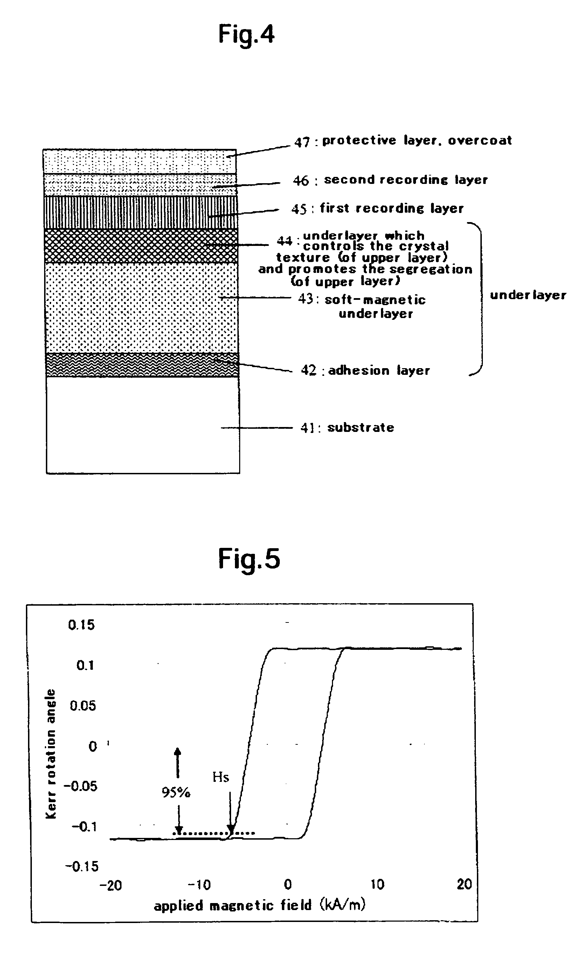

FIG. 4 is a schematic diagram of a cross-sectional structure showing one embodiment of the perpendicular magnetic recording medium 10 of the invention. The perpendicular magnetic recording medium of the invention was formed using the sputtering apparatus (C-3010) by ANELVA CORP. This sputtering apparatus has ten process chambers and one substrate load/unload chamber, and each chamber is pumped independently. After all the process chambers are pumped down to the degree of vacuum of $1 \times 10^{-5}$ Pa or less, processes were performed sequentially by moving a carrier with the substrate to each process chamber. A rotary magnet type magnetron sputter cathode was installed in the sputter process chamber, and a metal film and carbon film were formed by DC sputtering. The composition of each layer of the medium was evaluated by using X-ray photoelectron spectroscopy (XPS). Tunneling was performed in the depth direction by sputtering from the sample surface with an ion gun having an acceleration voltage of 500 V, and analysis was performed over a length of 1.5 mm and a width of 0.1 mm using the K$\alpha$ line of aluminium as an X ray source. The amount of each element was found by detecting the spectrum near the energies corresponding to the 1s-electron of C, 1s-electron of O, 2s-electron of Si, 2p-electron of Cr, 2p-electron of Co, 3d-electron of Ru and 4f-electron of Pt.

A glass substrate of diameter 63.5 mm was used for a substrate 41. On the substrate 41, an adhesion layer 42 of film thickness 10 nm comprising a NiTa alloy was formed to increase adhesion to the substrate. Here, the NiTa alloy was Ni-37.5at.%Ta. The adhesion layer 42 need only have sufficient adhesion to the substrate and the layer above the adhesion layer, and may be a Ni alloy, Co alloy or Al alloy. Examples are an AlTi alloy, NiAl alloy, CoTi alloy or AlTa alloy.

Next, the soft-magnetic underlayer 43 had a three-layer structure wherein a CoTaZr alloy was laminated via thin Ru. Here, the CoTaZr alloy was 92at.%Co-3at.%Ta-5at.%Zr. By using such an AFC (antiferromagnetic coupling) structure, the upper and lower CoTaZr alloy layers are coupled antiferromagnetically via the Ru layer, and noise due to the soft-magnetic underlayer can be reduced. The film thickness of Ru may be set to be in a range in which the AFC coupling can be maintained, which here was 0.7nm. Additional elements may be added to Ru in a range in which the AFC coupling can be maintained. The medium was manufactured so that the film thickness of the CoTaZr alloy per layer was 5 nm, 10 nm, 15 nm, 20 nm, 25 nm, 30 nm, 40 nm or 50 nm. Samples with a soft-magnetic underlayer and without upper layers were also manufactured, and the saturation magnetic flux density, evaluated when a maximum field of 1035 kA/m was applied in the film in-plane direction using a vibrating sample magnetometer, was 1.25T.

The soft-magnetic underlayer may have a structure wherein a magnetic domain control layer is provided under the soft-magnetic underlayer for fixing the magnetic domain of the soft-magnetic underlayer comprising a soft-magnetic material such as a layer of CoTaZr alloy, or a structure wherein a magnetic domain control layer is provided under a AFC structure.

The orientation-control and segregation-promotion layer 44 was formed by sequentially forming Ni-37.5at.%Ta of film thickness 2 nm, Ni-10at.%Cr-3at.%W of thickness 9nm and Ru of film thickness 16nm. The orientation control segregation promotion layer 44 controls the crystal orientation and the crystal grain diameter of the recording layer, and plays an important role in decreasing the exchange coupling between the crystal grains of the recording layer. The film thickness, structure and material of the orientation control segregation promotion layer 44 may be set to be in a range in which the aforesaid effect is obtained, but are not limited to the aforesaid film thickness, structure and material.

In the aforesaid structure of the orientation control segregation promotion layer 44, the function of the NiTa layer is to control the cryatallographic texture of the NiCrW layer and increase the (111) texture of NiCrW. The film thickness may be set to be in a range in which this is satisfied, and usually, a value of about 1 nm to 5 nm is used. Instead of a NiTa alloy, an amorphous material such as an AlTi alloy, CrTi alloy or CrTa alloy, or a nanocrystalline material such as Ta, can be used.

In the orientation control segregation promotion layer 44, the function of the NiCrW layer is to improve the Ru c-axis orientation which is perpendicular to the film plane, and control grain size and roughness. The film thickness may be set to be in a range which satisfies this purpose, and usually, a value of about 2 nm to 12 nm is used. Instead of a NiCrW alloy, Pd, Pt, Cu or Ni having a face-centered cubic lattice (fcc) structure, or an alloy thereof, may be used. Especially, by using an alloy having Ni as principal component and containing at least W, Cr, V or Cu, segregation of the recording layer can be promoted, which is preferred.

The function of the Ru layer is to control the crystal grain diameter and crystal orientation of the recording layer, and reduce the intergranular exchange coupling. The film thickness may be set to be in a range which satisfies this purpose, and usually, a value of about 3 nm to 30 nm is used. In this embodiment, the Ru layer of the orientation control segregation promotion layer 44 was divided into two layers, the lower layer half being formed at a gas pressure of 1Pa, at a deposition rate of 4nm/s, and the upper half being formed at a gas pressure of 6.5Pa, at a deposition rate of 1.5 nm/s. By forming the lower Ru layer at a low gas pressure and high rate, and forming the upper Ru layer at a high gas pressure and low rate, deterioration of orientation is suppressed and segregation of the recording layer can be promoted, which is preferred. Here, argon gas was used as the sputtering gas, but a small amount of oxygen or nitrogen may be added to Ar. Alternatively, an alloy having Ru as principal component, or a material containing an oxide such as $SiO_2$ in Ru, may be used instead of Ru.

When forming the first recording layer 45 having Co as principal component, and containing Cr, Pt and an oxide, a composite target containing a CoCrPt alloy and $SiO_2$ was used. When forming the first recording layer 45, a mixture of argon and oxygen gas was used as sputtering gas, the total gas pressure was 5Pa, and the oxygen concentration was 1.67%. The film thickness of the first recording layer 45 was 14nm, the deposition rate was 3 nm/s, and the substrate bias was -200 V. The composition (at.%) ratio of the first recording layer is as follows:

$$(Co+Cr+Pt): (Si+O) = 83.4 : 16.6$$

$$Co : Cr : Pt = 60.6 : 14.1 : 25.3$$

$$O : Si = 3.2 : 1$$

In FIG. 4, a sample was manufactured omitting the soft-magnetic underlayer 43 and second recording layer 46, and the saturation magnetization (Ms1) of the first recording layer was evaluated using a vibrating sample magnetometer (VSM). After cutting the sample into 8 mm squares, the saturation magnetization Ms1 was calculated from the obtained magnetization curve by applying a maximum field of 1035 kA/m in the direction perpendicular to film plane of the sample, and found to be 410 kA/m.

The first recording layer containing Co, Cr, Pt and an oxide, may be a^film of granular structure comprising a Co-Cr-Pt-B alloy, Co-Cr-Pt-Mo alloy, Co-Cr-Pt-Nb alloy, Co-Cr-Pt-Ta alloy, oxides of Si, oxides of Ta, oxides of Nb or oxides of Ti.

When forming the second recording layer 46 having Co as principal component, containing Cr and not containing an oxide, a CoCrPt alloy was used as target, argon was used as sputtering gas, the gas pressure was 1 Pa and the deposition rate was 2 nm/s. The film thickness of the second recording layer 46 was 9nm, and its composition was:

72at.%Co-12.5at.%Cr-15.5at.%Pt, 71.1at.%Co-13.5at.%Cr-15.4at.%Pt,
70.5at.%Co-14.5at.%Cr-15at.%Pt, 69.7at.%Co-15.5at.%Cr-14.8at.%Pt,
68.8at.%Co-16.6at.%Cr-14.6at.%Pt, 68at.%Co-17.5at.%Cr-14.5at.%Pt,
67.3at.%Co-18.5at.%Cr-14.2at.%Pt, 66.6at.%Co-19.4at.%Cr-14at.%Pt,
66.3at.%Co-20.5at.%Cr-13.2at.%Pt, 65.5at.%Co-21.5at.%Cr-l3at.%Pt,
65at.%Co-22.4at.%Cr-12.6at.%Pt, 64at.%Co-23.6at.%Cr-12.4at.%Pt.

The second recording layer that contains Co and Cr and does not contain an oxide, may be a Co-Cr alloy, Co-Cr-B alloy, Co-Cr-Mo alloy, Co-Cr-Nb alloy, Co-Cr-Ta alloy, Co-Cr-Pt-B alloy, Co-Cr-Pt-Mo alloy, Co-Cr-Pt-Nb alloy or Co-Cr-Pt-Ta alloy.

In FIG. 4. a sample omitting the soft-magnetic underlayer 43 and the first recording layer 45 was manufactured, and the saturation magnetization (Ms2) of the second recording layer was calculated by the same method.

Next, a 4-nm thick DLC (diamond-like carbon) film was formed as a protection layer 47. The film thickness was 4nm. An organic lubricant was applied to the surface, and a lubricating layer was formed.

Magnetic properties were evaluated using a Kerr effect measuring equipment at room temperature. The measurement wavelength was 350 nm, and the laser spot diameter was about 1 mm. The field was applied in the direction perpendicular to the sample film plane, the maximum field was 1580 kA/m (20kOe), and the Kerr loop was measured at a constant sweep rate for 60 seconds. When the film thickness of the recording layer is thin, the laser beam reaches the soft-magnetic underlayer, so change of the Kerr rotation angle resulting from magnetization of the soft-magnetic underlayer is added to the signal from the recording layer. The signal due to the soft-magnetic underlayer varies linearly relative to the field until magnetization is saturated in the film plane perpendicular direction, and was corrected so that that the slope near 395-1580 kA/m (5-10k0e) is 0.

FIG. 5 shows the state after correction. Next, the coercivity (Hc) and saturation magnetic field (Hs) were calculated. Hs was defined as the field when the Kerr rotation angle was 95% of the saturation value.

To evaluate read-write perfomances, data was recorded at a certain linear recording density, and (error bit number)/(read bit number) when 108 bits of data were read, was taken as the bit error rate (BER). The linear recording density when the BER was 10-5 (Log10(BER)=-5) was found. When the track pitch was changed at this linear recording density and data was recorded in several tracks, the track pitch density was estimated from the track pitch when the off-track capability at which the bit error rate was 10-3 or less, was 30% of this track pitch, and an operating test was performed at the areal recording density determined by these linear recording density and track pitch density conditions.

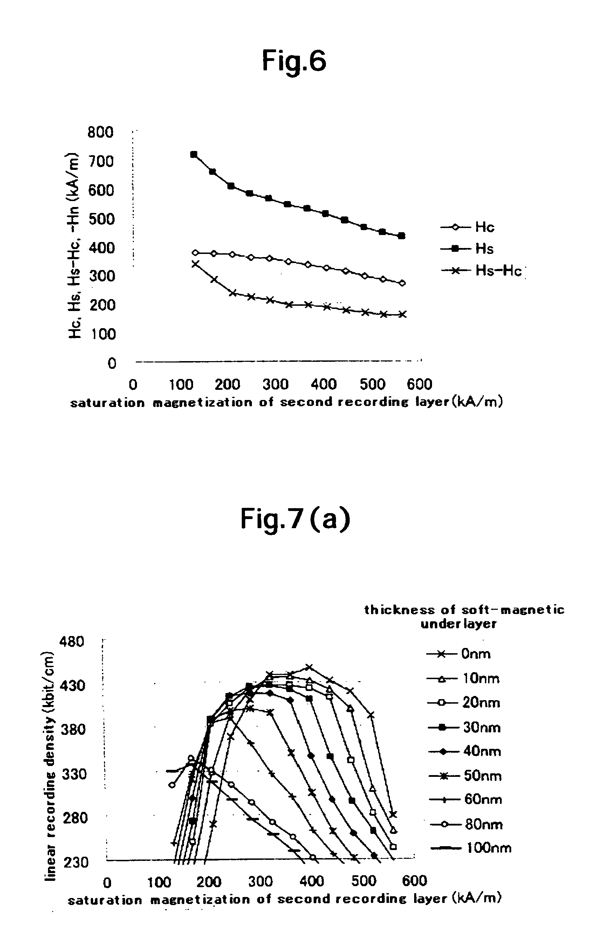

Since the magnetic properties of these media are almost independent of the film thickness of the soft-magnetic underlayer 43, as a typical example, FIG. 6 shows the values of Hc, Hs, Hs-Hc, -Hn for a medium which does not include the soft-magnetic underlayer 43. From FIG. 6, it is seen that by increasing the saturation magnetization Ms2 of the second recording layer (decreasing the Cr concentration), Hc, Hs, Hs-Hc decrease. Together with the decrease of Hc, Hs, an increase of OW performance was observed. When the exchange coupling in the second recording layer increases due to the increase of saturation magnetization of the second recording layer, Hs-Hc decreases. This shows that the more the saturation magnetization Ms2 of the second recording layer increases, the smaller the switching field dispersion of the recording layer can be made.

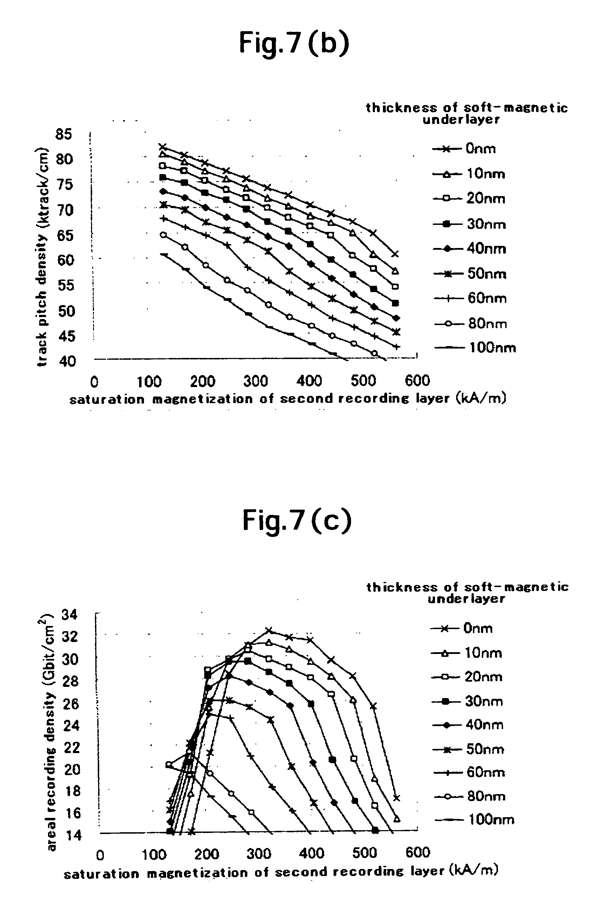

FIG. 7(a), FIG. 7(b), FIG. 7(c) respectively show the dependence of the linear recording density, track pitch density and areal recording density of these media on the saturation magnetization Ms of the second recording layer.

If the film thickness ts of the soft-magnetic underlayer is as much as 80 to 100 nm, the write-field inensity is large. Hence, when Hc and Hs are large and the switching field intensity of the recording layer is large, i.e., when the saturation magnetization Ms2 of the second recording layer is relatively small, of the order of 132 kA/m to 171 kA/m, matching of this switching field intensity with the write-field intensity is good, and linear recording density and areal recording density are a maximum. However, since the switching field distribution is large (Hs-Hc>279 kA/m), a sharp magnetic transition cannot be formed, and a high linear recording density is not obtained. The deterioration of the areal recording density when the saturation magnetization Ms2 of the second recording layer is larger than 171 kA/m, may be because the switching field intensity of the recording layer is too small relative to the write-field intensity, and side writing occurs in the cross-track direction and, in addition, on-track data bits are corrupted.

If the film thickness ts of the soft-magnetic underlayer is reduced down to 60 nm or less, the maximum write-field intensity of the shielded pole head and the write-field intensity at which the shielded pole head shows the maximum write-field gradient, become smaller. Hence, side writing in the cross-track direction can be suppressed and track pitch density can be increased. Also, if deterioration of linear recording density can be suppressed, since the track pitch density can be increased, the areal recording density can be largely increased.

To suppress deterioration of linear recording density, the switching field intensity of the recording layer must match the write-filed intensity at which the head shows the maximum write-field gradient, so the saturation magnetization Ms2 of the second recording layer must be increased, resulting in the reduction of the switching field intensity of the recording layer.

For example, if the film thickness ts of the soft-magnetic underlayer is 60 nm, the switching field intensity of a recording layer can be adjusted by arranging the saturation magnetization Ms2 of the second recording layer to be about from 210 kA/m to 249 kA/m, and a higher areal recording density than in the prior art where the film thickness ts of the soft-magnetic underlayer is as much as 100 nm, can be obtained. It appears that by using a second recording layer of larger Ms2 than in the prior art where the film thickness ts of the soft-magnetic underlayer is as much as 100 nm, the switching field distribution was suppressed small (Hs-Hc ~ 239 kA/m), and a sharp magnetic transition was formed. If the saturation magnetization Ms2 of the second recording layer is reduced to 171 kA/m or less, the switching field intensity of the recording layer increases relative to the write-field intensity, and write-ability (OW performance) was substantially degraded. Hence, the linear recording density falls substantially, and there is a rapid degradation of areal recording density. On the other hand, if the saturation magnetization Ms2 of the second recording layer is increased to 288 kA/m or more, the switching field intensity of the recording layer becomes too small relative to the write-field intensity, and side writing occurs in the cross-track direction and, in addition, on-track data bits are corrupted, so linear recording density and track pitch density fall rapidly, and areal recording density deteriorates rapidly as a result.

If the film thickness ts of the soft-magnetic underlayer is 50 nm and the saturation magnetization Ms2 of the second recording layer approximately ranges from 210 kA/m to 327 kA/m, which is larger than thicker SUL case, a higher areal recording density than in the prior art is obtained. If the film thickness ts of the soft-magnetic underlayer is 40 nm, the center of the appropriate range of saturation magnetization Ms2 of the second recording layer is shifted still more to the higher side, and if the saturation magnetization Ms2 of the second recording layer approximately ranges from 210 kA/m to 366 kA/m, which is larger than thicker SUL case, a higher areal recording density than in the prior art is obtained.

This is because, if the film thickness ts of the soft-magnetic underlayer is reduced, the maximum write-field intensity of the shielded pole head and the write-field intensity at which the shielded pole head shows the maximum write-field gradient, become smaller. Hence, when the saturation magnetization Ms2 of the second recording layer is increased and the switching field intensity of the recording layer is decreased, matching improves. Also, from FIG. 7(c), it is seen that the areal recording density increases more, the thinner the film thickness of the soft-magnetic underlayer is. This may be because, when the saturation magnetization Ms2 of the second recording layer is large, the switching field distribution of the total recording layer becomes smaller, so a sharper magnetic transition can be formed and a higher linear recording density can be achieved. Also, side writing in the cross-track direction is suppressed due to decrease in write-field intensity, and track pitch density increases.

It was found that if the film thickness ts of the soft-magnetic underlayer is made very small, i.e., 30 nm or less, when the switching field distribution of the recording layer is suppressed very small using a second recording layer of larger Ms2, matching is optimized between the switching field intensity of the recording layer and the write-field intensity at which shielded pole head shows the maximum magnetic field gradient, so a much higher recording density than in the prior art exceeding 29.5 Gbit/cm2 (29.5 Gigabits per square centimeter) can also be achieved. It was found that, when a first recording layer having Ms1 of 410 kA/m was used, the switching field intensity of the first recording layer is relatively small, and if there is no soft-magnetic underlayer, the highest areal recording density can be obtained.

It is seen that, when the saturation magnetization Ms2 of the second recording layer exceeds an appropriate range, the areal recording density deteriorates rapidly. This may be because, when the switching field intensity of the recording layer becomes too small relative to the write-field intensity, side writing occurs in the cross-track direction and, in addition, on-track data bits are corrupted, and because, in the region where the saturation magnetization Ms2 of the second recording layer is very large, the first recording layer cannot pin the domain walls any more, the domain wall motion plays a dominant role in the recording process, and noise increases rapidly. On the other hand, also when the saturation magnetization Ms2 of the second recording layer becomes smaller than an appropriate range, rapid deterioration of the areal recording density is observed.

This may be because, when the switching field distribution of the recording layer becomes large, since the switching field intensity becomes larger compared to the write-field intensity of the shielded pole head, write-ability deteriorates greatly.

From the above results, in order to reduce the switching field distribution of the recording layer and to achieve matching between the write-field intensity at which the shielded pole head shows the maximum magnetic field gradient and the switching field intensity of the recording layer, the relation of the film thickness ts (nm)of the soft-magnetic underlayer to the saturation magnetization Ms2 (kA/m) of the second recording layer, is as follows:

$$218+0.024*ts2-1.9*ts \leq Ms2 \leq 527-0.033*ts2-2.3*ts \ldots (1\text{-}1)$$

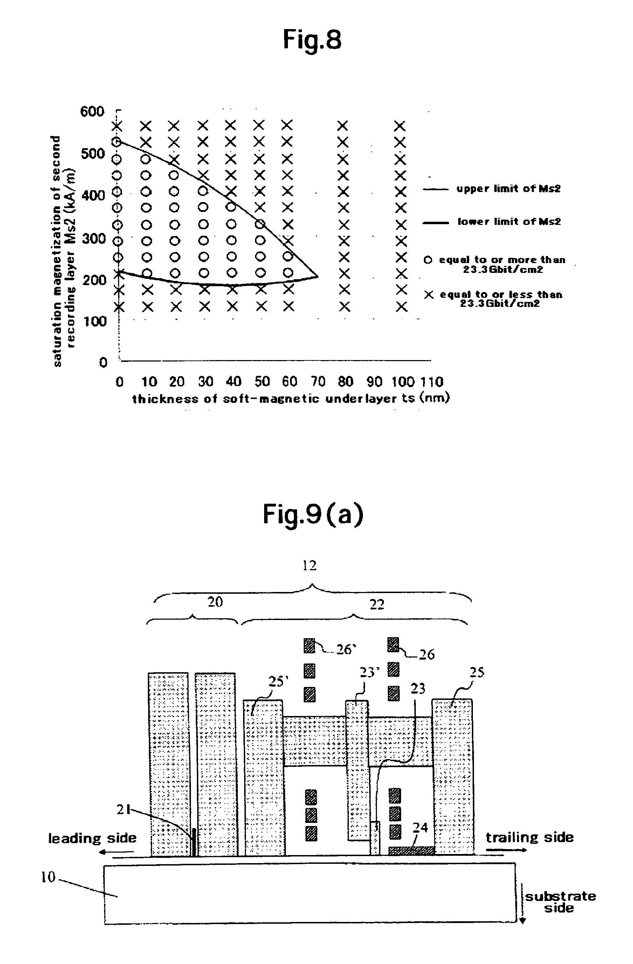

Relation (1-1) was calculated from FIG. 7(c) as a boundary from the film thickness ts of the soft-magnetic underlayer and the saturation magnetization Ms2 of the second recording layer at which an areal recording density of 23.3 Gbit/cm2 (23.3 Gigabits per square centimeter) or higher, which is superior to the prior art wherein the soft-magnetic underlayer was thick, was obtained. The horizontal axis of FIG. 7(c) is the film thickness of the soft-magnetic underlayer, and the vertical axis is the saturation magnetization of the second recording layer. FIG. 8 is a plot wherein an areal recording density of 23.3 Gbit/cm2 or higher, which is superior to the case of the prior art wherein the soft-magnetic underlayer is thick, is denoted by O, and a lower areal recording density is denoted by X. The upper boundary in FIG. 8 is the expression on the right-hand side of Relation (1-1), and the lower boundary in FIG. 8 is the expression on the left-hand side of Relation (1-1). From FIG. 8, it is seen that within the range of (1-1), an areal recording density of 23.3 Gbit/cm2 or higher which is superior to the case of the prior art where the soft-magnetic underlayer is thick, is obtained.

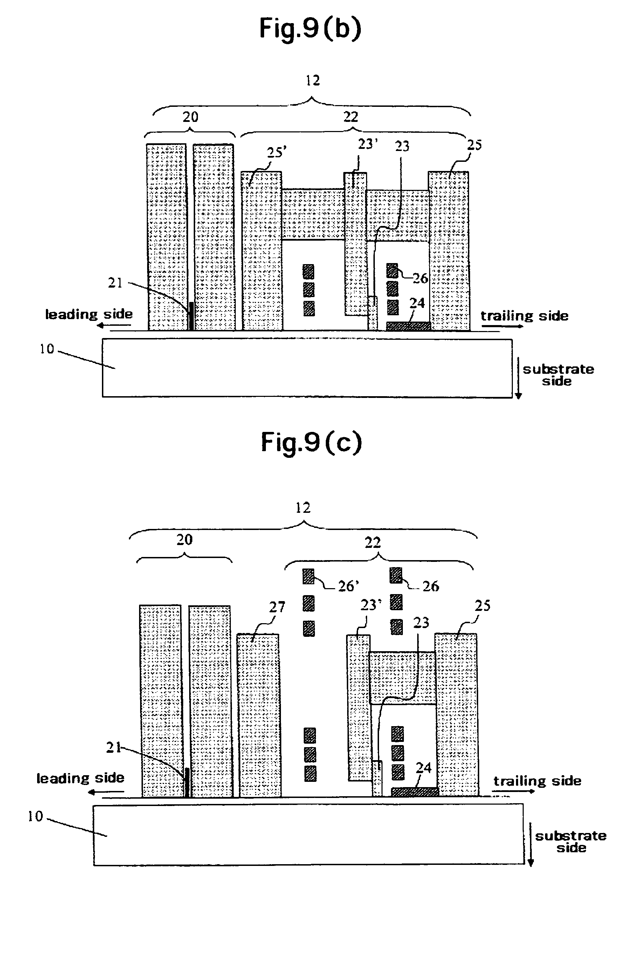

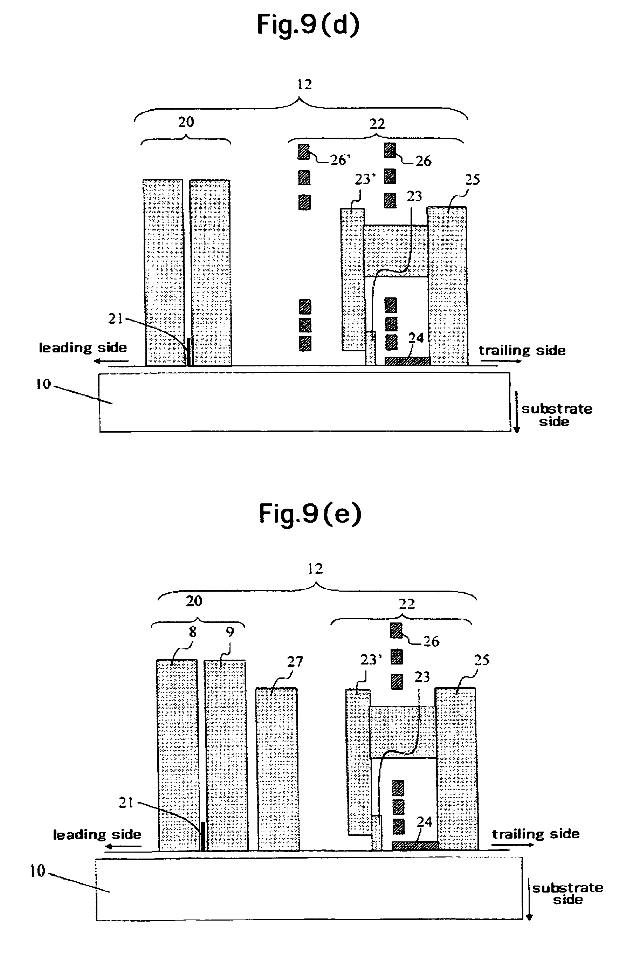

Apart from the magnetic head shown in FIG. 2, an identical effect was obtained with the magnetic heads shown in Figs. 9(a)-9(e).

FIG. 9(a) shows what occurs in the case of another combination of the magnetic head 12 and the perpendicular magnetic recording medium 10 of the invention. The reader 20 has a read element inserted between a pair of magnetic shields, the read element 21 being a giant magnetoresistive element (GMR) or a tunneling magnetoresistive element (TMR), or a current-perpendicular-to-plane giant magnetoresistive (CPP-GMR) element. The writer 22 has a single-pole-type writer comprising a main pole, two auxiliary poles 25, 25', and two thin film conductor coils 26, 26'. The main pole comprises a main pole yoke part 23' and a main pole tip part 23, and a shield 24 is formed via a nonmagnetic gap layer around the main pole tip part 23 so that at least the down-track direction of trailing side of the main pole is covered. There are two auxiliary poles, and two coils disposed therebetween. Currents are made to flow in the coils 26, 26' in opposite directions so that a magnetic flux in the same direction flows in the main pole.

FIG. 9(b) shows what occurs in the case of another combination of the magnetic head 12 and the perpendicular magnetic recording medium 10 of the invention. The reader 20 has a read element inserted between a pair of magnetic shields, the read element 21 being a giant magnetoresistive element (GMR) or a tunneling magnetoresistive element (TMR), or a current-perpendicular-to-plane giant magnetoresistive (CPP-GMR) element. The writer 22 has a single-pole-type writer comprising a main pole, the two auxiliary poles 25, 25', and the thin film conductor coil 26. The main pole comprises the main pole yoke 23' and main pole tip 23, and the shield 24 is formed via a nonmagnetic gap layer around the main pole tip part 23 so that at least the down-track direction of trailing side of the main pole is covered. The coil 26 is wound around the main pole.

FIG. 9(c) shows what occurs in the case of another combination of the magnetic head 12 and the perpendicular magnetic recording medium 10 of the invention. The reader 20 has a read element inserted between a pair of magnetic shields, the read element 21 being a giant magnetoresistive element (GMR) or a tunneling magnetoresistive element (TMR), or a current-perpendicular-to-plane giant magnetoresistive (CPP-GMR) element. The writer 22 has a single-pole-type writer comprising a main pole, the auxiliary pole 25, and two thin film conductor coils 26, 26'. The main pole comprises the main pole yoke 23' and main pole tip 23, and the shield 24 is formed via a nonmagnetic gap layer around the main pole tip part 23 so that at least the down-track direction of trailing side of the main pole is covered. The coils are disposed on both the trailing side and the leading side of the main pole. Currents are made to flow in the coils 26, 26' in opposite directions so that a magnetic flux flows in the main pole in the same direction. An auxiliary shield 27 composed of magnetic materials is also provided between the main pole and read shield to prevent the flux generated by the main pole from flowing into the read element.

FIG. 9(d) shows what occurs in the case of another combination of the magnetic head 12 and the perpendicular magnetic recording medium 10 of the invention. The reader 20 has a read element inserted between a pair of magnetic shields, the reproduction element 21 being a giant magnetoresistive element (GMR) or a tunneling magnetoresistive element (TMR), or a current-perpendicular-to-plane giant magnetoresistive (CPP-GMR) element. The writer 22 has a single-pole-type writer comprising a main pole, the auxiliary pole 25, and the two thin film conductor coils 26, 26'. The main pole comprises a main pole yoke 23' and main pole tip 23, and the shield 24 is formed via a nonmagnetic gap layer around the main pole tip part 23 so that at least the down-track direction of trailing side of the main pole is covered. The coils are disposed on both the trailing side and the leading side of the main pole. Currents are made to flow in the coils 26, 26' in opposite directions so that a magnetic flux flows in the main pole in the same direction.

FIG. 9(e) shows what occurs in the case of another combination of the magnetic head 12 and the perpendicular magnetic recording medium 10 of the invention. The reader 20 has a read element inserted between a pair of magnetic shields, the reproduction element 21 being a giant magnetoresistive element (GMR) or a tunneling magnetoresistive element (TMR), or a current-perpendicular-to-plane giant magnetoresistive (CPP-GMR) element. The writer 22 has a single-pole-type writer comprising a main pole, the auxiliary pole 25, and a thin film conductor coil 26. The main pole comprises a main pole yoke 23' and main pole tip 23, and the shield 24 is formed via a nonmagnetic gap layer around the main pole tip part 23 so that at least the down-track direction of trailing side of the main pole is covered. The auxiliary shield 27 of magnetic materials is also provided between the main pole and read shield to prevent the flux generated by the main pole from flowing into the read element.

The mechanical strength of the aforesaid medium was evaluated from the scratch depth. A scratch test was performed using a three-dimensional roughness meter (KosakA instruments Ltd.), wherein a stylus of 5 $\mu$mR was scanned at a speed of 0.01 nm/s while pressing against the substrate under a fixed load of 200 $\mu$N. The the scratch depth produced on the substrate surface was measured using an AFM (atomic force microscope), and the mechanical strength of the medium was calculated from the relation between the applied load and scratch depth.

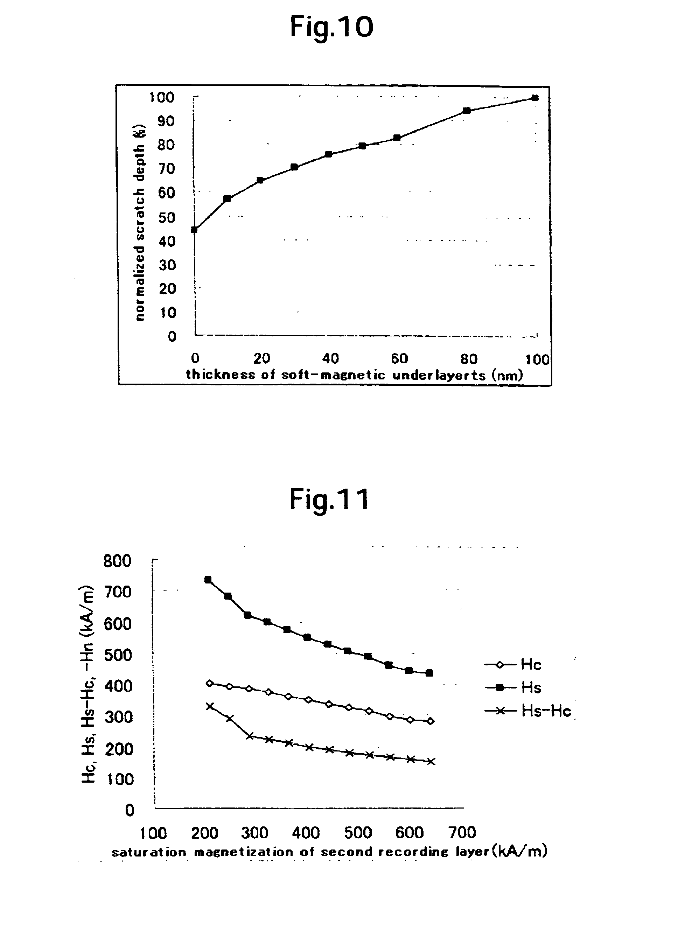

Since the scratch strength of these media is almost independent of the composition of the second recording layer, as a typical example, FIG. 10 shows the dependence of scratch depth on the soft-magnetic underlayer film thickness in the case where the second recording layer has the composition 68at.%Co-17.5at.%Cr-14.5at.%Pt. The scratch depth is normalized to its value when the film thickness ts of the soft-magnetic underlayer is 100 nm. By reducing the film thickness ts of the soft magnetic underlayer to 60 nm or less, the scratch depth is reduced by about 15% or more as compared with the case of ts=100 nm, and the mechanical strength of the medium is greatly increased. It was found that, when the film thickness ts of the soft-magnetic underlayer was made as thin as 30 nm or less, the scratch depth is reduced by about 30% or more as compared with the case of ts=100 nm, and the mechanical strength of the medium is greatly increased. When these media were incorporated in the device shown in FIG. 1 and shock resistance was evaluated, a large increase of 10% or more was observed. From the viewpoint of mechanical strength improvement, the soft-magnetic underlayer is preferably 60 nm or less, but more preferably 30 nm or less. In particular, when there is no soft-magnetic underlayer, the scratch depth can be reduced to approximately half, which is much preferred.

Embodiment 2

The magnetic storage device of this embodiment has the same structure as that of Embodiment 1 except for the perpendicular magnetic recording medium 10. The perpendicular magnetic recording medium 10 was manufactured using the same sputtering system, layer structure and process conditions as in Embodiment 1 described above. As the adhesion layer 42, Al-50at.%Ti of film thickness 5 nm was used instead of the NiTa alloy. As the soft-magnetic underlayer 43, 51at.%Fe-34at.%Co-10at.%Ta-5at.%Zr was used instead of the CoTaZr alloy. The film thickness of Ru in the AFC structure was 0.45 nm. A value of 5 nm, 10 nm, 15 nm, 20 nm, 25 nm, 30 nm, 40 nm, or 50 nm was used for the film thickness of the FeCoTaZr alloy per layer in manufacturing the media. Samples with a soft-magnetic underlayer and without upper layers were also manufactured, and the saturation magnetic flux density, evaluated when a maximum field of 1035 kA/m was applied to the film in-plane direction using a vibrating sample magnetometer, was 1.41T.

The orientation control segregation promotion layer 44 was formed by sequentially forming Cr-50at.%Ti of film thickness 2 nm, Ni-8at.%W of thickness 8nm and Ru of film thickness 16nm.

When forming the first recording layer 45 having Co as principal component, and containing Cr, Pt and an oxide, a composite target containing a CoCrPt alloy and SiO2 was used. When forming the first recording layer 45, a mixture of argon and oxygen gas was used as sputtering gas, the total gas pressure was 5Pa, and the oxygen concentration was 1.67%. The film thickness of the first recording layer 45 was 13 nm, the deposition rate was 3 nm/s, and the substrate bias was -200V. The composition (at.%) ratio of the first recording layer is as follows:

$$(Co+Cr+Pt):(Si+O)=83.5:16.5$$

$$Co:Cr:Pt=62.5:12.1:25.4$$

$$O:Si=3.1:1$$

In FIG. 4, a sample was manufactured omitting the soft-magnetic underlayer 43 and second recording layer 46, and the saturation magnetization (Ms1) of the first recording layer was evaluated. The saturation magnetization Ms1 of the sample was found to be 470 kA/m.

When forming the second recording layer 46 having Co as principal component, containing Cr and not containing an oxide, the film thickness was 8nm, and its composition was:

73.6at.%Co-10.4at.%Cr-16at.%Pt,
72.6at.%Co-11.6at.%Cr-15.8at.%Pt,
72at.%Co-12.5at.% Cr-15.5at.%Pt,
71.1 at.%Co-13.5at.%Cr-15.4at.%Pt,
70.5at.%Co-14.5at.%Cr-15at.%Pt,
69.7at.%Co-15.5at.%Cr-14.8at.%Pt,
68.8at.%Co-16.6at.%Cr-14.6at.%Pt,
68at.%Co-17.5at.%Cr-14.5at.%Pt,
67.3at.%Co-18.5at.%Cr-14.2at.%Pt,
66.6at.%Co-19.4at.%Cr-14at.%Pt,
66.3at.%Co-20.5at.%Cr-13.2at.%Pt,
65.5at.%Co-21.5at.%Cr-13at.%Pt.

In FIG. 4. a sample omitting the soft-magnetic underlayer 43 and the first recording layer 45 was manufactured, and the saturation magnetization (Ms2) of the second recording layer was calculated by the same method.

Since the magnetic properties of these media are almost independent of the film thickness of the soft-magnetic under layer 43, as a typical example, FIG. 11 shows the values of Hc, Hs, Hs-Hc, -Hn for a medium which does not include the soft-magnetic under layer 43. From FIG. 11, it is seen that when the saturation magnetization Ms2 of the second recording layer is increased, Hc, Hs, Hs-Hc decrease as in the case of Embodiment 1. This shows that when the exchange coupling in the second recording layer increases due to the increase of saturation magnetization of the second recording layer, the smaller the switcing field dispersion of the recording layer can be made. It is also seen that compared with the case of Embodiment 1 where Ms1 of the first recording layer shown in FIG. 6 is 410 kA/m, a second recording layer of larger Ms2 is required to make the switching field distribution of the recording layer just as small as the case of Embodiment 1. Due to the decrease of Hc, Hs, an improvement of OW performance was observed.

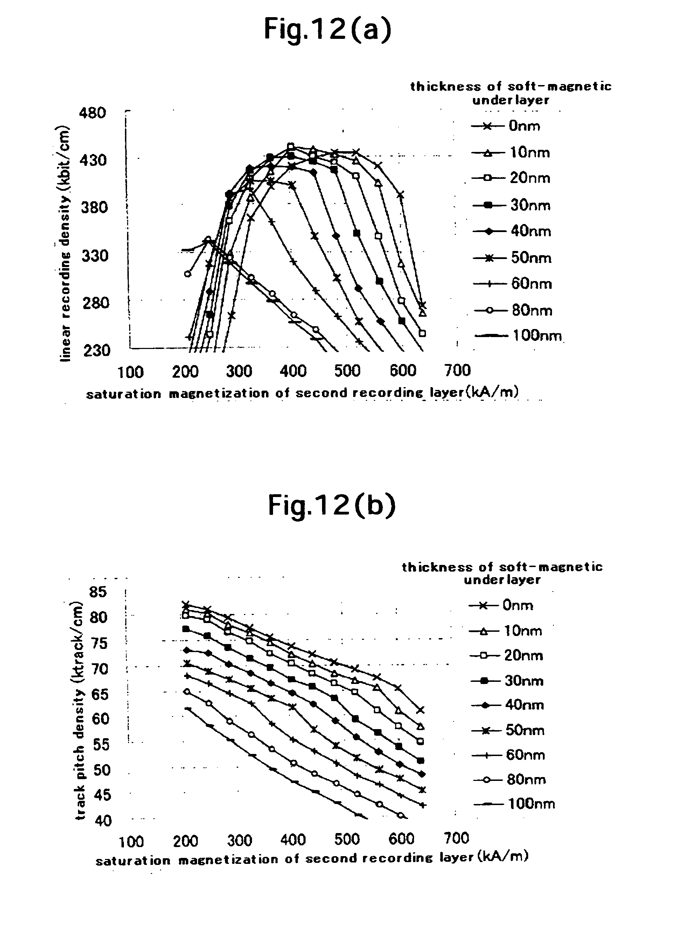

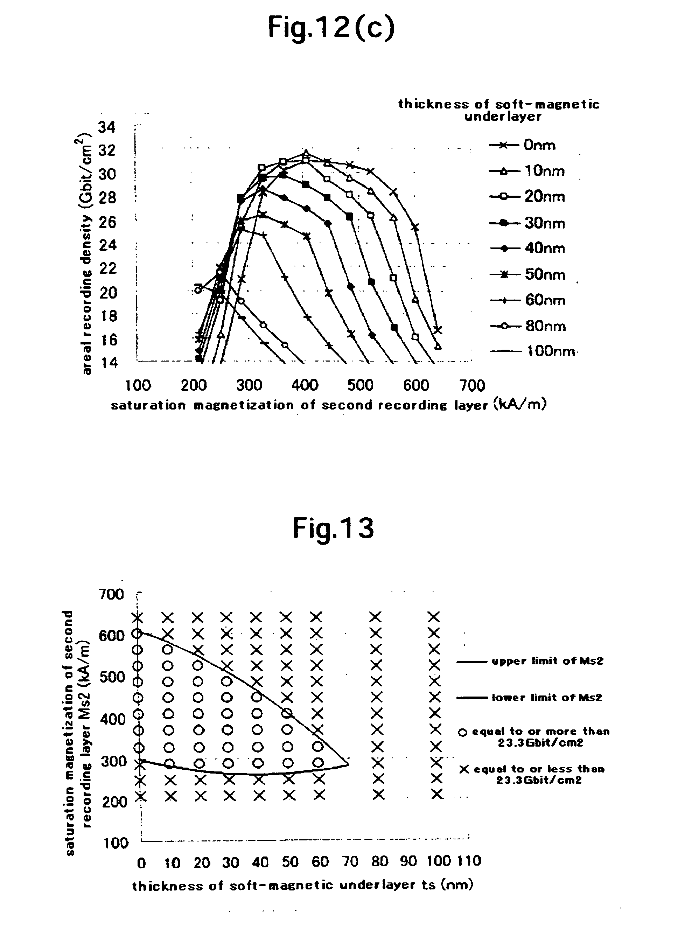

FIG. 12(a), FIG. 12(b), FIG. 12(c) respectively show the dependence of the linear recording density, track pitch density and areal recording density of these media on the saturation magnetization Ms of the second recording layer.

If the film thickness ts of the soft-magnetic underlayer is as much as 80 to 100 nm, the write-field intensity is large. Hence, when Hc and Hs are large and the switching field intensity of the recording layer is large, i.e., when the saturation magnetization Ms2 of the second recording layer is of the order of 210 kA/m to 294 kA/m, the switching field intensity of the recording layer well matches the write-field intensity, and linear recording density and areal recording density are a maximum. However, since the switching field distribution is large (Hs-Hc>279 kA/m), a sharp magnetic transition cannot be formed, and a high linear recording density is not obtained. Also, since side writing occurs in the cross-track direction, the track pitch density decreases. As a result, a high areal recording density cannot be obtained.

If the film thickness ts of the soft-magnetic underlayer is reduced to 60 nm or less, the maximum write-field intensity and the write-field intensity at which the write-field gradient is a maximum, become smaller. Hence, side writing in the cross-track direction can be suppressed and track pitch density can be increased. If deterioration of linear recording density can be suppressed, since the track pitch density can be increased, the areal recording density can be largely increased.

To suppress deterioration of linear recording density, the switching field intensity of the recording layer must match the write-filed intensity at which the head shows the maximum write-field gradient, so the saturation magnetization Ms2 of the second recording layer must be increased, resulting in the reduction of the switching field intensity of the recording layer.

For example, if the film thickness ts of the soft-magnetic underlayer is 60 nm, the switching field intensity of a recording layer can be approximately adjusted to the write-field intensity at which the shielded pole head shows the maximum magnetic field gradient by arranging the saturation magnetization Ms2 of the second recording layer to be about from 288 kA/m to 327 kA/m, and a higher areal recording density than in the case of the prior art where the film thickness ts of the soft-magnetic underlayer is as much as 100 nm, can be obtained. This may be because by using a second recording layer of larger Ms2 than in the prior art where the film thickness ts of the soft-magnetic underlayer is much as 100 nm, the switching field distribution is suppressed small (Hs-Hc - 239 kA/m), a sharp magnetic transition can be formed, and a higher areal recording density than in the prior art can be obtained. It is seen that, compared with the case of Embodiment 1 where Ms1 of the first recording layer shown in FIG. 7(c) is 410 kA/m, the saturation magnetization Ms2 of the second recording layer required to obtain a higher areal recording density than that of the prior art increases by about 80 kA/m. When the saturation magnetization Ms1 of the first recording layer increases, the magnetic anisotropy of the individual magnetic grains of the first recording layer increases, so the switching field intensity of the first recording layer increases. This shows that the saturation magnetization Ms2 of the second recording layer must be increased to decrease the switching field intensity of the total recording layer. The deterioration of areal recording density when the saturation magnetization Ms2 of the second recording layer is reduced to 249 kA/m or less, may be due to the fact that the switching field intensity of the total recording layer becomes larger than the write-field intensity, and write-ability (OW performance) was substantially degraded. On the other hand, the deterioration of areal recording density when the saturation magnetization Ms2 of the second recording layer is increased to 366 kA/m or more, may be due to the fact that the switching field intensity of the recording layer becomes too small relative to the write-field intensity, so side writing occurs in the cross-track direction and, in addition, on-track data bits are corrupted.

If the film thickness ts of the soft-magnetic underlayer is 50 nm and the saturation magnetization Ms2 of the second recording layer approximately ranges from 288 kA/m to 405 kA/m, which is larger than thicker SUL case, a higher areal recording density than in the prior art is obtained. If the film thickness ts of the-soft magnetic underlayer is 40 nm, the center of the appropriate range of saturation magnetization Ms2 of the second recording layer is shifted still more to the higher side, and if the saturation magnetization Ms2 of the second recording layer approximately ranges from 288 kA/m to 444 kA/m, which is larger than thicker SUL case, a higher areal recording density than in the prior art is obtained.

This is because, if the film thickness ts of the soft-magnetic underlayer is reduced, the maximum write-field intensity and the write-field intensity at which the shielded pole head shows the maximum write-field gradient, become smaller. Hence, when the saturation magnetization Ms2 of the second recording layer is increased and the switching field intensity of the recording layer is decreased, matching improves. Also, from FIG. 12(c), it is seen that the areal recording density increases with decreasing the soft-magnetic underlayer thickness. This may be because, when the saturation magnetization Ms2 of the second recording layer is large, the switching field distribution of the total recording layer becomes smaller, so a sharper magnetic transition can be formed and a higher linear recording density can be achieved. Also, side writing in the cross-track direction is suppressed due to decrease in write-field intensity, and track pitch density increases. It is seen that when the film thickness ts of the soft-magnetic layer is 50 nm or 40 nm, compared to the case of Embodiment 1 when Ms1 of the first recording layer shown in FIG. 7(c) is 410 kA/m, the saturation magnetization Ms2 of the second recording layer required to obtain a higher areal recording density than in the prior art is shifted to the higher value by about 80 kA/m. When the saturation magnetization Ms1 of the first recording layer increases, the magnetic anisotropy of the individual magnetic grains of the first recording layer increases, so the switching field intensity of the first recording layer increases. This shows that, to decrease the switching field intensity of the total recording layer, the saturation magnetization Ms2 of the second recording layer must be increased.

It was found that if the film thickness ts of the soft-magnetic underlayer is made very small, i.e., 30 nm or less, when the switching field distribution of the recording layer is suppressed very small using a second recording layer of larger Ms2, matching is optimized between the switching field intensity of the recording layer and the write-field intensity at which the shielded pole head shows the maximum magnetic field gradient, so a much higher recording density than in the prior art exceeding 29.5 Gbit/cm2 can be achieved.

When the saturation magnetization Ms2 of the second recording layer exceeds an appropriate range, the areal recording density deteriorates rapidly. This may be because, when the switching field intensity of the recording layer becomes too small relative to the head recording magnetic field, side writing occurs in the cross-track direction and, in addition, on-track data bits are corrupted, and because, in the region where the saturation magnetization Ms2 of the second recording layer is very large, the first recording layer cannot pin the domain walls any more, the domain wall motion plays a dominant role in the recording process, and noise increases rapidly. On the other hand, when the saturation magnetization Ms2 of the second recording layer becomes smaller than an appropriate range, the areal recording density also deteriorates rapidly. This may be because the switching field distribution of the recording layer becomes larger, and since the switching field intensity becomes larger than the write-field intensity of the shielded pole head, the write-ability deteriorates greatly.

In other words, when the film thickness ts of the soft-magnetic underlayer decreases, the maximum write-field intensity of the shielded pole head and the write-field intensity at which it shows the maximum write-field gradient, decrease further. Hence, if the saturation magnetization of the second recording layer is increased further and the switching field intensity of the recording layer is decreased, matching improves and the switching field distribution of the recording layer can be suppressed even smaller, so an even higher areal recording density is obtained.

From the above results, in order to reduce the switching field distribution of the recording layer and to achieve matching between the write-field intensity at which the shielded pole head shows the maximum magnetic field gradient and the switching field intensity of the recording layer, the relation of the film thickness ts of the soft-magnetic underlayer to the saturation magnetization Ms2 of the second recording layer, is as follows:

$$298+0.024*ts2-1.9*ts \leq Ms2 \leq 607-0.033*ts2-2.3*ts \ ... \ (2-1)$$

Relation (2-1) was calculated from FIG. 7(c) as a boundary from the film thickness ts of the soft-magnetic underlayer and the saturation magnetization Ms2 of the second recording layer, at which an areal recording density of higher than 23.3 Gbit/cm2 (23.3 Gigabits per square centimeter), which is superior to the prior art wherein the soft-magnetic underlayer was thick, was obtained. The horizontal axis of FIG. 7(c) is the film thickness of the soft-magnetic underlayer, and the vertical axis is the saturation magnetization of the second recording layer. FIG. 13 is a plot wherein an areal recording density of 23.3 Gbit/cm2 or higher, which is superior to the case of the prior art wherein the soft-magnetic underlayer is thick, is denoted by O, and a lower areal recording density is denoted by X. The upper boundary in FIG. 13 is the expression on the right-hand side of Relation (2-1), and the lower boundary in FIG. 13 is the expression on the left-hand side of Relation (2-1). From FIG. 13, it is seen that within the range of (2-1), an areal recording density of 23.3 Gbit/cm2 or higher which is superior to the case of the prior art where the soft-magnetic underlayer is thick, is obtained.

By comparing FIG. 8, FIG. 13 and Relations (1-1), (2-1), it was clear that by increasing the saturation magnetization of the first recording layer by 60 kA/m from 410 kA/m to 470 kA/m, a suitable saturation magnetization of the second recording layer was shifted to the high Ms value by about 80 kA/m. This may be because, when the Cr concentration of the first recording layer decreases and the magnetization increases, to decrease the the switching field dispersion, the exchange coupling must be further increased by increasing the magnetization of the second recording layer.

Apart from the magnetic heads shown in FIG. 2, an identical effect was obtained using the magnetic head combinations shown in Figs. 9(a)-9(e).

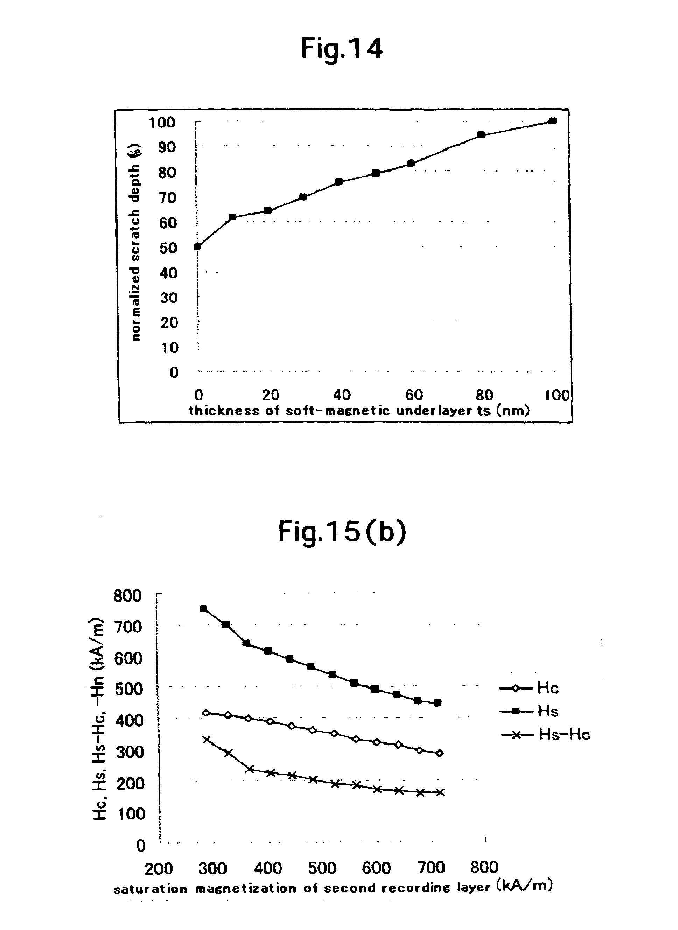

The mechanical strength of the aforesaid medium was evaluated from the scratch depth. Since the scratch strength of these media is almost independent of the composition of the second recording layer, as a typical example, FIG. 14 shows the dependence of scratch depth on the soft-magnetic underlayer film thickness in the case where the second recording layer has the composition 69.7at.%Co-15.5at.%Cr-14.8at.%Pt. The scratch depth is normalized to its value when the film thickness ts of the soft-magnetic underlayer is 100 nm. By reducing the film thickness ts of the soft-magnetic underlayer to 60 nm or less, the scratch depth is reduced by about 15% or more as compared with the case of ts=100 nm, and the mechanical strength of the medium is greatly increased. It was found that, when the film thickness ts of the soft-magnetic underlayer was made as thin as 30 nm or less, the scratch depth is reduced about 30% or more as compared with the case of ts=100 nm, and the mechanical strength of the medium is greatly increased. When these media were incorporated in the device shown in FIG. 1 and shock resistance was evaluated, a large increase of 10% or more was observed. From the viewpoint of mechanical strength improvement, the soft-magnetic underlayer is preferably 60 nm or less, but more preferably 30 nm or less. In particular, when there is no soft-magnetic underlayer, the scratch depth can be reduced to approximately half, which is much preferred.

Embodiment 3

The magnetic storage device of this embodiment has the same structure as that of Embodiment 1 except for the perpendicular magnetic recording medium 10. The perpendicular magnetic recording medium 10 was manufactured using the same sputtering system, layer structure and process conditions as in Embodiment 1 described above. As the adhesion layer 42, Al-50at.%Ti of film thickness 5 nm was used instead of the NiTa alloy. As the soft-magnetic underlayer 43, Fe-30at.%Co-15at.%B was used instead of the CoTaZr alloy. The film thickness of Ru in the AFC structure was 0.6nm. A value of 5 nm, 10 nm, 15 nm, 20 nm, 25 nm, 30 nm, 40 nm, or 50 nm was used for the film thickness of the FeCoB alloy per layer in manufacturing the media. Samples with a soft-magnetic underlayer and without upper layers were also manufactured, and the saturation magnetic flux density, evaluated when a maximum field of 1035 kA/m was applied to the film in-plane direction using a vibrating sample magnetometer, was 1.5T.

The orientation control segregation promotion layer 44 was formed by sequentially forming Ta-30at.%Cr of film thickness 3 nm, Ni-10at.%Cr-3at.%Nb of thickness 7nm and Ru of film thickness 16 nm.

When forming the first recording layer 45 having Co as principal component, and containing Cr, Pt and an oxide, a composite target containing a CoCrPt alloy and SiO2 was used. When forming the first recording layer 45, a mixture gas of argon and oxygen was used as sputtering gas, the total gas pressure was 5Pa, and the oxygen concentration was 1.67%. The film thickness of the first recording layer 45 was 12 nm, the deposition rate was 3 nm/s, and the substrate bias was -200V. The composition (at.%) ratio of the first recording layer is as follows:

$$(Co+Cr+Pt):(Si+O)=83.5:16.5$$

$$Co:Cr:Pt=63.9:10.1:26$$

O:Si=3.3:1

In FIG. 4, a sample was manufactured omitting the soft-magnetic underlayer 43 and second recording layer 46, and the saturation magnetization Ms1 of the first recording layer was evaluated. The saturation magnetization Ms1 of the sample was found to be 530 kA/m.

When forming the second recording layer 46 having Co as principal component, containing Cr and not containing an oxide, the film thickness was 7nm, and its composition was:

75at.%Co-8.6at.%Cr-16.4at.%Pt,
74.3at.%Co-9.5at.%Cr-16.2at.%Pt,
73.6at.%Co-10.4at.%Cr-16at.%Pt,
72.6at.%Co-11.6at.%Cr-15.8at.%Pt,
72at.%Co-12.5at.%Cr-15.5at.%Pt,
71.1at.%Co-13.5at.%Cr-15.4at.%Pt,
70.5at.%Co-14.5at.%Cr-15at.%Pt,
69.7at.%Co-15.5at.%Cr-14.8at.%Pt,
68.8at.%Co-16.6at.%Cr-14.6at.%Pt,
68at.%Co-17.5at.%Cr-14.5at.%Pt,
67.3at.%Co-18.5at.%Cr-14.2at.%Pt,
66.6at.%Co-19.4at.%Cr-14at.%Pt.

Since the magnetic properties of these media are almost independent of the film thickness of the soft-magnetic under layer 43, as a typical example, FIG. 15 shows the values of Hc, Hs, Hs-Hc, -Hn for a medium which does not include the soft-magnetic underlayer 43. From FIG. 15, it is seen that when the saturation magnetization Ms2 of the second recording layer is increased, Hc, Hs, Hs-Hc decrease as in the case of Embodiment 1 and Embodiment 2. This shows that, when the exchange coupling in the second recording layer increases due to the increase of saturation magnetization of the second recording layer, the smaller the switching field distribution of the recording layer can be made. It is also seen that compared to FIG. 6 and FIG. 11, when the saturation magnetization Ms1 of the first recording layer is large and magnetic anisotropy is large, a second recording layer of larger Ms2 is required to make the switching field distribution of the total recording layer just as small. Due to the decrease of Hc, Hs, an improvement of OW performance was observed.

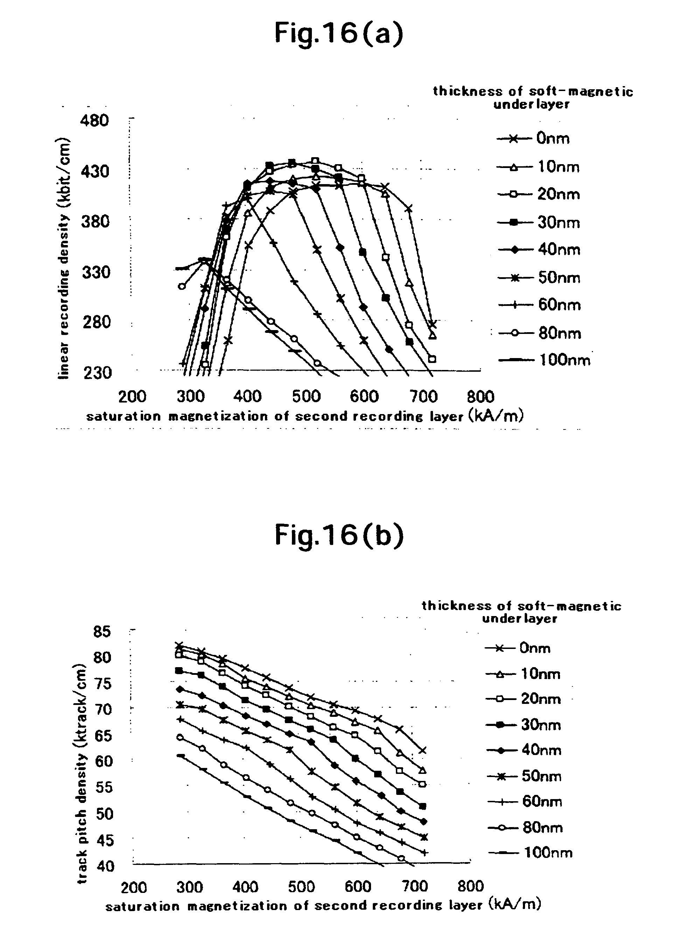

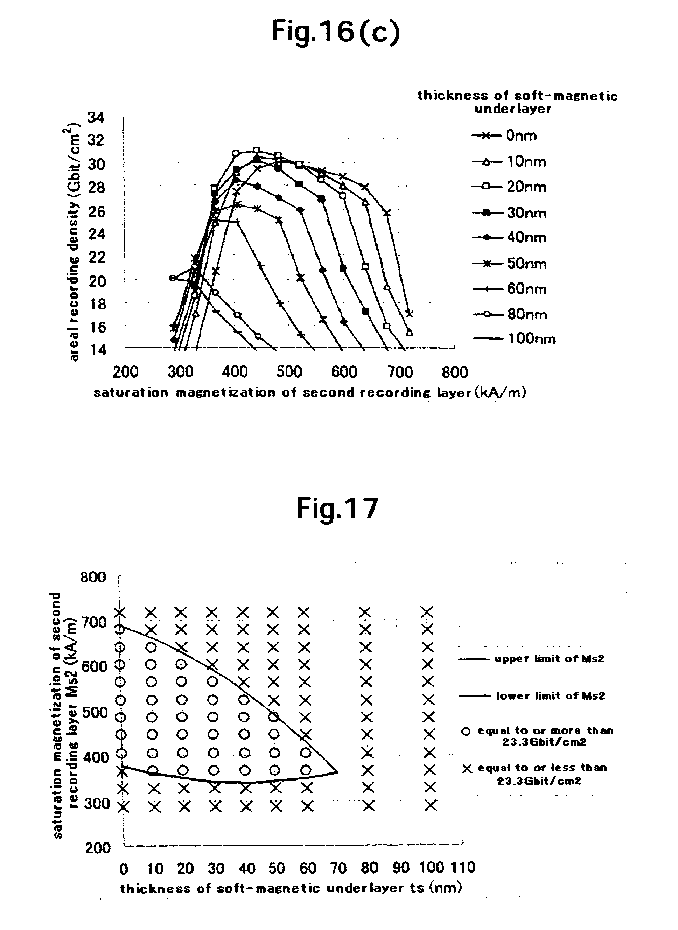

FIG. 16(a), FIG. 16(b), FIG. 16(c) respectively show the dependence of the linear recording density, track pitch density and areal recording density of these media on the saturation magnetization Ms of the second recording layer.

If the film thickness ts of the soft-magnetic underlayer is as much as 80 to 100 nm, the head write-field intensity is large. Hence, when Hc and Hs are large and the switching field intensity of the recording layer is large, i.e., when the saturation magnetization Ms2 of the second recording layer is of the order of 288 kA/m to 327 kA/m, the switching field intensity of the recording layer well matches the write-field intensity, and linear recording density and areal recording density are a maximum. However, since the switching field distribution is large (Hs-Hc>279 kA/m), a sharp magnetic transition cannot be formed, and a high linear recording density is not obtained. Also, since side writing occurs in the cross-track direction, the track pitch density decreases. As a result, a high areal recording density cannot be obtained.

If the film thickness ts of the soft-magnetic underlayer is reduced to 60 nm or less, the head maximum write-field intensity and the write-field intensity at which the write-field gradient is a maximum, become smaller. Hence, side writing in the cross-track direction can be suppressed and track pitch density can be increased. If deterioration of linear recording density can be suppressed, since the track pitch density can be increased, the areal recording density can be largely increased.

To suppress deterioration of linear recording density, the switching field intensity of the recording layer must match the write-filed intensity at which the head shows the maximum write-field gradient, so the saturation magnetization Ms2 of the second recording layer must be increased, resulting in the reduction of the switching field intensity of the recording layer.

If the film thickness ts of the soft-magnetic underlayer is 60 nm, the switching field intensity of the recording layer can be adjusted to be near the write-field intensity at which the head shows the maximum write-field gradient by arranging the saturation magnetization Ms2 of the second recording layer to be from 370 kA/m to about 410 kA/m. This may be because, by using a second recording layer of larger Ms2 than in the prior art where the film thickness ts of the soft-magnetic underlayer is as much as 100 nm, the switching field distribution is suppressed small (Hs-Hc - 239 kA/m), a sharp magnetic transition can be formed, and a higher areal recording density than in the prior art can be obtained.

It is seen that, compared with the case where Ms1 of the first recording layer shown in FIG. 7(c) or Fig. 12(c) is 410 kA/m or 470 kA/m, the saturation magnetization Ms2 of the second recording layer required to obtain a higher areal recording density than that of the prior art increases by about 80 kA/m with increasing the saturation magnetization of the first recording layer by about 60kA/m. When the saturation magnetization Ms1 of the first recording layer increases, the magnetic anisotropy of the individual magnetic grains of the first recording layer increases, so the switching field intensity of the first recording layer increases. This shows that, to decrease the switching field intensity of the total recording layer, the saturation magnetization Ms2 of the second recording layer must be increased. The deterioration of areal recording density when the saturation magnetization Ms2 of the second recording layer is reduced to 327 kA/m or less, is probably due to the fact that the switching field intensity of the recording layer increases relative to the write-field intensity, and write-ability (OW performance) substantially declines. On the other hand, the deterioration of areal recording density when the saturation magnetization Ms2 of the second recording layer is increased to 444 kA/m or more, may be due to the fact that the switching field intensity of the recording layer becomes too small relative to the write-field intensity, so side writing occurs in the cross-track direction and, in addition, on-track data bits are corrupted.

If the film thickness ts of the soft-magnetic underlayer is 50 nm and the saturation magnetization Ms2 of the second recording layer approximately ranges from 366 kA/m to 483 kA/m, which is larger than thicker SUL case, a higher areal recording density than in the prior art is obtained. If the film thickness ts of the soft-magnetic underlayer is 40 nm, the center of the appropriate range of saturation magnetization Ms2 of the second recording layer is shifted still more to the higher value, and the saturation magnetization Ms2 of the second recording layer approximately ranges from 366 kA/m to 522 kA/m, which is larger than thicker SUL case , a higher areal recording density than in the prior art is obtained.

This is because, if the film thickness ts of the soft-magnetic underlayer is reduced, the maximum write-field intensity and the write-field intensity at which the shielded pole head shows the maximum write-field gradient, become smaller. Hence, when the saturation magnetization Ms2 of the second recording layer is increased and the switching field intensity of the recording layer is decreased, matching improves. Also, from FIG. 16(c), it is seen that the areal recording density increases when the soft-magnetic underlayer becomes thinner. This may be because, when the saturation magnetization Ms2 of the second recording layer is large, the switching field distribution of the total recording layer becomes smaller, so a sharper magnetic transition can be formed and a higher linear recording density can be achieved. Also, side writing in the cross-track direction is suppressed due to decrease in write-field intensity, and track pitch density increases. It is seen, from a comparison with the case when Ms1 of the first recording layer shown in FIG. 7(c) or FIG. 12(c) is 410 kA/m or 470 kA/m, that when the film thickness ts of the soft-magnetic layer is 50 nm or 40 nm, if the saturation magnetization Ms1 of the first recording layer increases by 60 kA/m, the saturation magnetization Ms2 of the second recording layer required to obtain a higher areal recording density than in the prior art increases by about 80 kA/m. This may be because, when the Cr concentration of the first recording layer decreases and the magnetization increases, to decrease the switching field dispersion, the exchange coupling must be made stronger by increasing the magnetization of the second recording layer.

It was found that if the film thickness ts of the soft-magnetic underlayer is made very small, i.e., 30 nm or less, when the switching field distribution of the recording layer is suppressed very small using a second recording layer of larger Ms2, matching is optimized between the switching field intensity of the recording layer and the write-field intensity at which the shielded pole head shows the maximum magnetic field gradient, so a much higher recording density than in the prior art exceeding 29.5 Gbit/cm2 can be achieved.

When the saturation magnetization Ms2 of the second recording layer exceeds an appropriate range, the areal recording density deteriorates rapidly. This may be because, when the switching field intensity of the recording layer becomes too small relative to the write-field intensity, side writing occurs in the cross-track direction and, in addition, on-track data bits are corrupted, and because, in the region where the saturation magnetization Ms2 of the second recording layer is very large, the first recording layer cannot pin the domain walls any more, the domain wall motion plays a dominant role in the recording process, and noise increases rapidly. On the other hand, when the saturation magnetization Ms2 of the second recording layer is smaller than an appropriate range, the areal recording density also deteriorates rapidly. This may be because the switching field distribution of the recording layer becomes large, and since the switching field intensity becomes larger than the write-field intensity of the shielded pole head, the write-ability deteriorates greatly.

From the above results, in order to reduce the switching field distribution of the recording layer and to achieve matching between the write-field intensity at which the shielded pole head shows the maximum magnetic field gradient and the switching field intensity of the recording layer, the relation of the film thickness ts of the soft-magnetic underlayer to the saturation magnetization Ms2 of the second recording layer, is as follows:

$$378+0.024*ts2-1.9*ts \leq Ms2 \leq 687-0.033*ts2-2.3*ts \ \dots \ (3\text{-}1)$$

Relation (3-1) was calculated from FIG. 16(c) as a boundary from the film thickness ts of the soft-magnetic underlayer and the saturation magnetization Ms2 of the second recording layer, at which an areal recording density of higher than 23.3 Gbit/cm2 (23.3 Gigabits per square centimeter), which is superior to the prior art wherein the soft-magnetic underlayer was thick, was obtained. The horizontal axis of FIG. 16(c) is the film thickness of the soft-magnetic underlayer, and the vertical axis is the saturation magnetization of the second recording layer. FIG. 17 is a plot wherein an areal recording density of 23.3 Gbit/cm2 or higher, which is superior to the case of the prior art wherein the soft-magnetic underlayer is thick, is denoted by O, and a lower areal recording density is denoted by X. The upper boundary in FIG. 17 is the expression on the right-hand side of Relation (3-1), and the lower boundary in FIG. 17 is the expression on the left-hand side of Relation (3-1). From FIG. 17, it is seen that within the range of (3-1), an areal recording density of 23.3 Gbit/cm2 or higher, which is superior to the case of the prior art where the soft-magnetic underlayer is thick, is obtained.

By comparing FIG. 8, FIG. 13, FIG. 17 and Relations (1-1), (2-1), (3-1), it was clear that when the saturation magnetization Ms1 of the first recording layer was varied in steps of 60 kA/m, i.e., 410 kA/m, 470 kA/m, 530 kA/m, the relation between the saturation magnetization Ms2 of the second recording layer and the soft-magnetic underlayer ts required to reduce the switching field distribution of the recording layer and to achieve matching between the switching field intensity of the recording layer and the write-field intensity at which the shielded pole head shows the maximum magnetic field gradient, was shifted in steps of 80 kA/m to higher Ms. If the variation amount of the first saturation magnetization is $\Delta Ms1$ and the variation amount of the second recording layer is $\Delta Ms2$, the boundary is shifted by $\Delta Ms2 = 4/3 * \Delta Ms1$. In other words, for Ms1 (kA/m) of the first recording layer, Ms2 (kA/m) of the second recording layer and the film thickness ts (nm) of the soft magnetic underlayer, Relations (1-1) to (1-3) may be summarized as follows:

$$20 + 0.033 * ts2 + 2.3 * ts \leq 4/3 * Ms1 - Ms2 \leq 329 - 0.024 * ts2 + 1.9 * ts \ ... \ (3-2)$$

By satisfying Relation (3-2), the switching field distribution of the total recording layer is decreased, and matching can be obtained between the switching field intensity of the recording layer and the write-field intensity at which the shielded pole head shows the maximum magnetic field gradient. [ When there is no soft-magnetic underlayer, the following relation holds for ts=0:

$$20 \leq 4/3 * Ms1 - Ms2 \leq 329 \ ... \ (3-3)$$

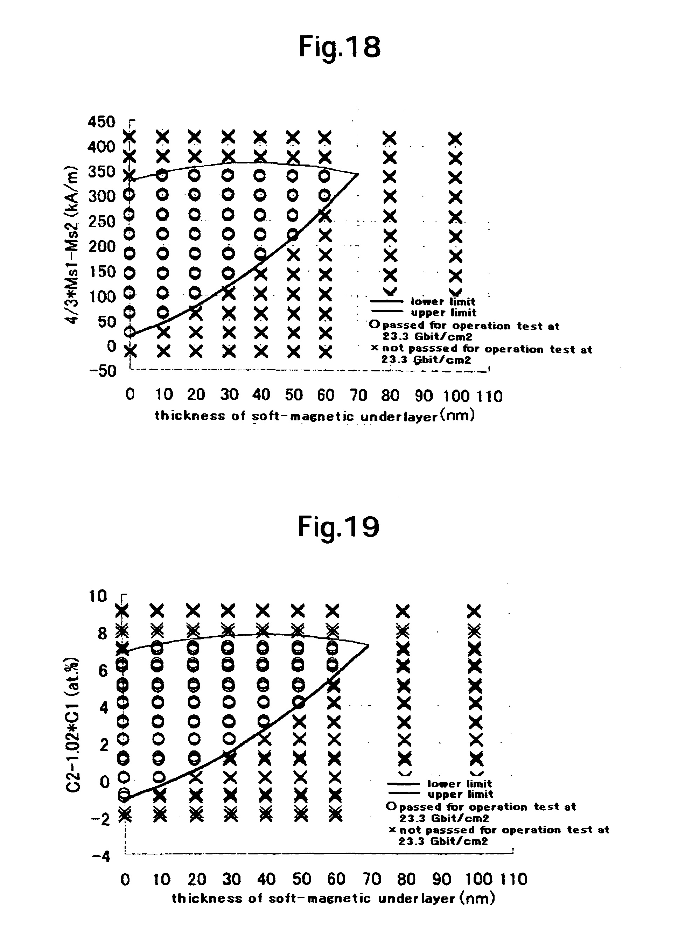

FIG. 18 shows the result of plotting the vertical axis of FIG. 8, FIG. 13 and FIG. 17 as (4/3*Ms1-Ms2). The boundary in FIG. 18 is Relation (3-2). Relation (3-2) is determined not only from the relation required to achieve matching between the write-field intensity at which the shielded pole head shows the maximum write-field gradient and the switching field intensity of the recording layer by adjusting the film thickness ts of the-soft magnetic underlayer but also from the relation between the saturation magnetization Ms2 of the second recording layer and saturation magnetization Ms1 of the first recording layer required to decrease the switching field distribution of the recording layer and suppress the magnetic transitions resulting from domain wall motion in the recording process. If 4/3*Ms1-Ms2 decreases and the lower boundary in FIG. 18 is exceeded, i.e., if the left-hand side of Relation (3-2) is not satisfied, the switching field intensity of the recording layer relative to the write-field intensity becomes too small which gives rise to side writing in the cross-track direction and corrupting the on-track data bits, or the first recording layer cannot pin the domain walls any more, the domain wall motion plays a dominant role in the recording process and noise increases sharply, consequently the areal recording density deteriorates greatly. Conversely, if 4/3*Ms1-Ms2 increases and the upper boundary in FIG. 18 is exceeded, i.e., if the right-hand side of Relation (3-2) is not satisfied, the switching field intensity of the recording layer becomes too large relative to the write-field intensity so that write-ability deteriorates greatly, or the switching field distribution of the recording layer increases so that the areal recording density deteriorates greatly.

From the above results, it was clear that by satisfying Relation (3-2), matching can be obtained between the write-field intensity at which the shielded pole head shows the maximum write-field gradient and the switching field intensity of the recording layer, the switching field distribution of the recording layer can be decreased, and the magnetic transitions resulting from domain wall motion in the recording process can be suppressed. As a result, an areal recording density of 23.3 Gbit/cm2 or higher, which is superior to the prior art, can be obtained.

Apart from the magnetic head shown in FIG. 2, an identical effect was obtained with the magnetic heads shown in Figs. 9(a)-9(e).

In order to achieve the saturation magnetization of the first recording layer and the second recording layer described above, the Cr concentration contained in the first recording layer must be suitably selected. From Embodiment 1 to Embodiment 3, it was verified that the saturation magnetization of the first recording layer and the second recording layer vary almost linearly relative to the Cr concentration. Specifically, if the Cr concentration relative to the total amount of Co, Cr and Pt contained in the first recording layer is C1 (at.%), the Cr concentration relative to the total amount of Co, Cr and Pt when Pt is contained in the second recording layer is C2 (at.%) and the film thickness of the soft-magnetic underlayer is ts (nm), the relations Ms1=833-30*C1, Ms2=1050.2-39.1*C2 are satisfied, and Relation (3-2) can be rewritten as follows:

$$-1.0+0.00084*ts2+0.059*ts \leq C2-1.02*C1 \leq 6.9-0.00061*ts2+0.049*ts \ ... \ (3-4)$$

When there is no soft- magnetic underlayer, the following relation holds for ts=0:

$$-1.0 \leq C2-1.02*C1 \leq 6.9 \ ... \ (3-5)$$

FIG. 19 is the result of plotting the vertical axis of FIG. 18 as (C2-1.02*C1) when the Cr concentration of the first recording layer is C1 (at.%), and the Cr concentration of the second recording layer is C2 (at.%). The boundary of FIG. 19 is Relation (3-4). From FIG. 19, it was clear that by satisfying Relation (3-4), matching can be obtained between the write-field intensity at which the shielded pole head shows the maximum write-field gradient and the switching field intensity of the recording layer, the switching field distribution of the recording layer can be decreased, and the magnetic transitions resulting from domain wall motion in the recording process can be suppressed. Hence, an areal recording density of 23.3 Gbit/cm2 or more, which is superior to that of the prior art, can be obtained.

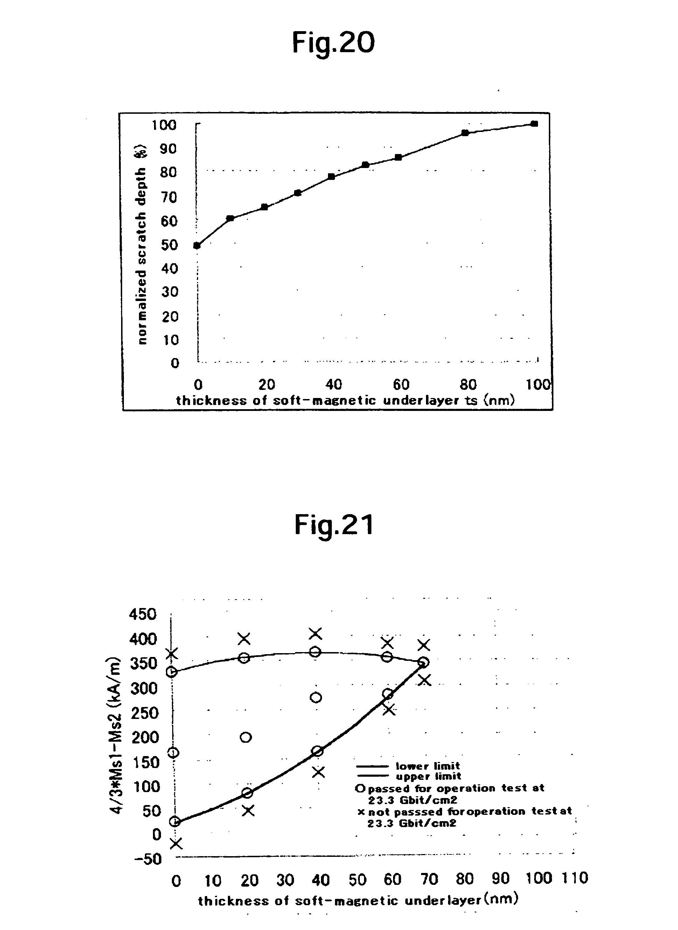

The mechanical strength of the aforesaid medium was evaluated from the scratch depth. Since the scratch strength of these media is almost independent of the composition of the second recording layer, as a typical example, FIG. 20 shows the dependence of scratch depth on the soft-magnetic underlayer film thickness in the case where the second recording layer has the composition 73at.%Co-17at.%Cr-10at.%Pt. The scratch depth is normalized to its value when the film thickness ts of the soft-magnetic underlayer is 100 nm. By reducing the film thickness ts of the soft-magnetic underlayer to 60 nm or less, the scratch depth is reduced by about 15% or more as compared with the case of ts=100 nm, and the mechanical strength of the medium is greatly increased. It was found that, when the film thickness ts of the soft-magnetic underlayer is made as small as 30 nm or less, the scratch depth is reduced about 30% or more as compared with the case of ts=100 nm, and the mechanical strength of the medium is greatly increased. When these media were incorporated in the device shown in FIG. 1 and shock resistance was evaluated, a large increase of 10% or more was observed. From the viewpoint of mechanical strength improvement, the soft-magnetic underlayer is preferably 60 nm or less, but more preferably 30 nm or less. In particular, when there is no soft-magnetic underlayer, the scratch depth can be reduced to approximately half, which is much preferred.

Embodiment 4

The magnetic storage device of this embodiment has the same structure as that of Embodiment 1 except for the perpendicular magnetic recording medium 10. The perpendicular magnetic recording medium 10 was manufactured with an identical layer composition and process conditions using an identical sputtering system to that of Embodiment 2 mentioned above. However, the film thickness ts of the soft-magnetic underlayer (nm) was as shown in TABLE 1. The material of the soft-magnetic underlayer 43 and the film thickness of Ru in the AFC are identical to those of Embodiment 2. The first recording layer was formed using a composite target containing a CoCrPt alloy and SiO2, and the saturation magnetization Ms1 (kA/m), Cr concentration C1 (at.%) and film thickness were as shown in TABLE 1. Here, regarding the oxide concentration in the first recording layer, the sum of the concentrations (at.%) of Si and O was 18 at.% when the total concentration (at.%) of Co, Cr, Pt, Si, O was 100, and Si concentration : O concentration was 1:4.1. Regarding the Pt concentration of the first recording layer, the Pt concentration was 27 at.% when the total concentration (at.%) of Co, Cr, Pt was 100.

The second recording layer was a CoCrPt alloy film, the Pt concentration was fixed at 14.8 at.%, and the saturation magnetization Ms2 (kA/m), Cr concentration C2 (at.%) and film thickness were as shown in TABLE 1.

Table 1

| ts | 4/3*Ms1-Ms2 | C2-1.02*C1 | Ms1 | C1 | First recording layer film thickness | Ms2 | C2 | Second recording layer film thickness | BER deterioration of adjacent track | OW | Overall evaluation |
|---|---|---|---|---|---|---|---|---|---|---|---|
| (nm) | (kA/m) | (at.%) | (kA/m) | (at.%) | (nm) | (kA/m) | (at.%) | (nm) | | (dB) | |
| 0 | 367 | 7.9 | 350 | 16.1 | 15.0 | 100 | 24.3 | 9.0 | 0.4 | -18 | × |
| 0 | 329 | 6.9 | 350 | 16.1 | 15.0 | 138 | 23.3 | 9.0 | 0.44 | -25 | ○ |
| 0 | 167 | 2.8 | 350 | 16.1 | 15.0 | 300 | 19.2 | 9.0 | 0.5 | -31 | ○ |
| 0 | 23 | -0.9 | 350 | 16.1 | 15.0 | 444 | 15.5 | 9.0 | 0.55 | -35 | ○ |
| 0 | -21 | -2.0 | 350 | 16.1 | 15.0 | 488 | 14.4 | 9.0 | 2.3 | -42 | × |
| 20 | 394 | 8.5 | 438 | 13.2 | 13.0 | 190 | 22.0 | 9.0 | 0.38 | -16 | × |
| 20 | 356 | 7.5 | 438 | 13.2 | 13.0 | 228 | 21.0 | 8.0 | 0.43 | -26 | ○ |
| 20 | 194 | 3.4 | 438 | 13.2 | 13.0 | 390 | 16.9 | 8.0 | 0.49 | -30 | ○ |
| 20 | 80 | 0.5 | 438 | 13.2 | 13.0 | 504 | 14.0 | 8.0 | 0.56 | -36 | ○ |
| 20 | 44 | -0.5 | 438 | 13.2 | 13.0 | 540 | 13.0 | 8.0 | 2.3 | -44 | × |
| 40 | 404 | 8.8 | 558 | 9.2 | 12.0 | 340 | 18.2 | 8.0 | 0.4 | -16 | × |
| 40 | 366 | 7.8 | 558 | 9.2 | 12.0 | 378 | 17.2 | 7.0 | 0.46 | -25 | ○ |
| 40 | 274 | 5.4 | 558 | 9.2 | 12.0 | 470 | 14.8 | 7.0 | 0.51 | -30 | ○ |
| 40 | 165 | 2.7 | 558 | 9.2 | 12.0 | 579 | 12.1 | 7.0 | 0.57 | -38 | ○ |
| 40 | 124 | 1.6 | 558 | 9.2 | 12.0 | 620 | 11.0 | 7.0 | 2.35 | -43 | × |
| 60 | 385 | 8.2 | 600 | 7.8 | 11.0 | 415 | 16.2 | 5.5 | 0.42 | -16 | × |
| 60 | 356 | 7.5 | 600 | 7.8 | 11.0 | 444 | 15.6 | 6.5 | 0.5 | -26 | ○ |
| 60 | 280 | 5.6 | 600 | 7.8 | 11.0 | 520 | 13.6 | 5.5 | 0.65 | -35 | ○ |
| 60 | 250 | 4.8 | 600 | 7.8 | 11.0 | 550 | 12.8 | 5.5 | 2.4 | -39 | × |
| 70 | 380 | 8.1 | 600 | 7.8 | 11.0 | 420 | 16.1 | 5.5 | 0.55 | -17 | × |
| 70 | 344 | 7.2 | 600 | 7.8 | 11.0 | 456 | 15.2 | 5.5 | 0.1 | -28 | ○ |
| 70 | 310 | 6.3 | 600 | 7.8 | 11.0 | 490 | 14.3 | 5.5 | 2.5 | -36 | × |

EP 1 840 884 A1

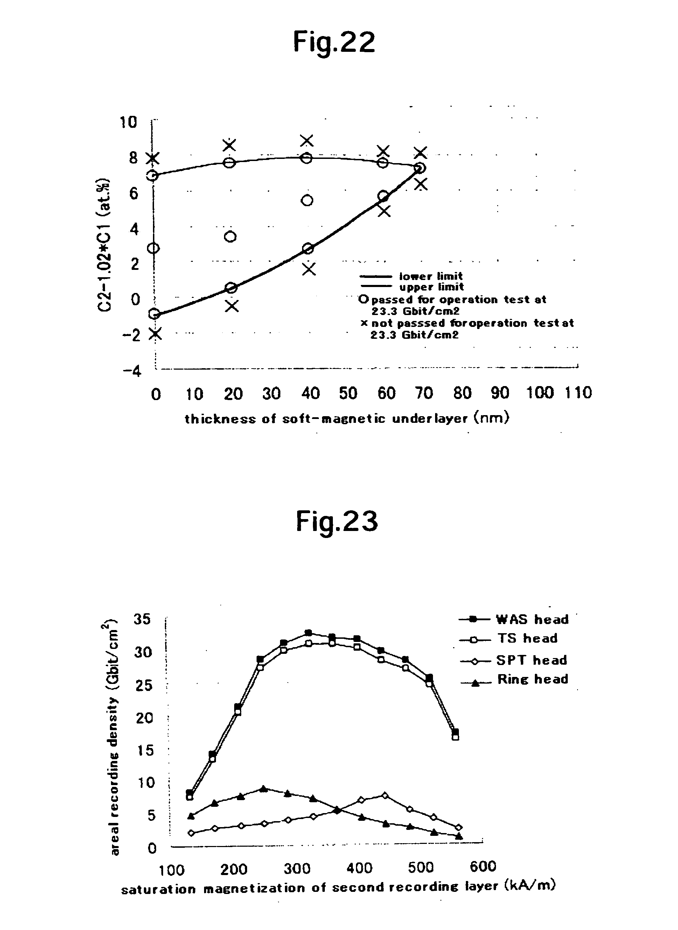

An operation test was performed at 23.3 Gbit/cm2 using a combination of the same shielded pole head as that of Embodiment 1 and the media shown in TABLE 1. FIG. 21 is a plot of the results with (4/3*Ms1-Ms2) as the vertical axis, and the soft-magnetic underlayer film thickness ts as the abscissa. The boundary in FIG. 21 is Relation (3-2). FIG. 22 is a re-plot of FIG. 21 with (C2-1.02*C1) as the vertical axis. The boundary in FIG. 22 is Relation (3-4). From FIG. 21 and FIG. 22, it is seen that if Relations (3-2) and (3-4) are satisfied, the switching field distribution of the total recording layer is decreased and matching can be obtained between the switching field intensity of the recording layer and the write-filed intensity at which the shielded pole head shows the maximum magnetic field gradient. Hence, a recording density of 23.3 Gbit/cm2, which is superior to that of the prior art, can be realized.

Next, data was recorded on several tracks with a linear recording density of 374016 bits per cm and a track pitch density of 62205 tracks per cm. The bit error rate BER (1 time) of the adjacent track after recording data on a certain track once, and the bit error rate BER (10000 times) of the adjacent track after recording data on a certain track 10000 times, were measured, and the deterioration amount of the bit error rate in the adjacent track was calculated from logarithm Log10 (BER (10000 times)/BER (1 time)) of this ratio.
If the deterioration amount of the bit error rate in the adjacent track exceeds 1, when using a hard disk drive, data erasure (adjacent track erasure) occurs frequently, and gives rise to problems. OW performance was evaluated using the ration of a residual signal at 19685fr/mm to a signal at 3937fr/mm after a signal of 3937fr/mm was superimposed on a signal of 19685fr/mm. If OW becomes higher than -20dB, when using a hard disk drive, data recording and erasure cannot be performed properly, and give rise to problems. TABLE 1 shows the results.

From the results of TABLE 1, it is seen that if the left-hand side of Relation (3-2) or (3-4) was not satisfied, adjacent track erasure occurred and there were problems with the hard disk drive. This may be because the switching field intensity of the recording layer becomes too small relative to the write-filed intensity, so side writing takes place in the cross-track direction. Also, it is seen that if the right-hand side of Relation (3-2) or (3-4) was not satisfied, deterioration of OW peformance occurred, data recording and erasure could not be performed properly, and there were problems with the hard disk drive. This may be because the switching field intensity of the recording layer becomes too large relative to the write-field intensity. An identical behavior was seen also in the device described in Embodiments 1-3.

From the above results, it was found that if the relation s (3-2) and (3-4) are satisfied, the switching field distribution of the total recording layer is decreased and matching can be obtained between the switching field intensity of the recording layer and the wirte-field intensity at which the shielded pole head shows the maximum magnetic field gradient. Hence, a recording density of 23.3 Gbit/cm2, which is superior to that of the prior art, can be realized. In addition, adjacent track erasure can be suppressed and sufficient write-ability for data recording and erasure can be ensured, and a hard disk drive can be used without any problems.

Embodiment 5

The magnetic storage device of this embodiment had an identical construction to those of Embodiment 1 to Embodiment 4. read-write performances were evaluated using various heads of different construction as the magnetic head 12, and a comparison was made with the results from Embodiment 1 to Embodiment 4.

A writer which has a single pole type writer structure comprising a main pole and an auxiliary pole formed on the leading side and which has a magnetic shield formed additionally via a nonmagnetic gap layer so as to cover the down-track direction of trailing side of the main pole was used as the write head(hereafter, TS head). FIG. 2 shows a cross-sectional schematic view of the head, and FIG. 3(b) shows a schematic view of writer of the TS head viewed from the ABS surface of the head. A reader having a geometric track width of 70 nm using the giant magnetoresistive effect, and a TS head having a geometric track width of the main pole tip of 100 nm, a main pole-trailing shield distance of 50 nm and a height for the shield 24 of 100 nm, were used. The only difference from the WAS head shown in FIG. 3 (a) is that there is no shield (side shield) in the cross-track direction of the main pole, and the track width, main pole-trailing shield distance and shield height may be within the ranges disclosed in Embodiment 1.

As a comparison, the SPT head conventionally used for a perpendicular medium was evaluated. FIG. 3(c) shows a schematic view from the ABS surface of the SPT head. An evaluation was made using a head comprising a single pole type write element having a geometric track width of 100 nm, and a read element using the giant magnetoresistive effect having a track width of 80 nm.

Also, as an example of the RING head conventionally used for longitudinal magnetic recording media, a comparative evaluation was made using a head comprising a read element having a geometric track width of 180 nm and a gap length of 80 nm, and a read element using the giant magnetoresistive effect having a geometric track width of 100 nm.

Also when a TS head is used, by making the relation between the saturation magnetization Ms1 of the first recording layer, the saturation magnetization Ms2 of the second recording layer and the film thickness ts of the soft-magnetic underlayer lie within the range of Relation (3-2), the switching field distribution of the total recording layer can be decreased, and matching can be obtained between the switching field intensity of the recording layer and the write-field intensity at which the shielded pole head shows the maximum magnetic field gradient. It was found that, compared with the prior art where the soft-magnetic underlayer is as thick as 100 nm, the linear recording density and track pitch density can be increased, and as a result an identical effect can be obtained to that of a trailing and side-shielded head (WAS head) wherein the areal recording density can be increased. However, since there is no side shield, an increase of track width of about 5 nm on average was observed. From the viewpoint that track pitch density can be increased, a combination with a WAS head is more preferred.

On the other hand, if a SPT head which were often employed in combination with a perpendicular magnetic recording medium in the prior art or an longitudinal recording RING head were used, even in the case where the film thickness of the soft-magnetic underlayer was as thick as 100 nm, the linear recording density at which the BER was 10-5 was decreased by 150kBPI or more on average as compared with a WAS head or TS head, and unlike the case of a WAS head or TS head, no improvement in the linear recording density or areal recording density was observed even if the soft-magnetic underlayer was made thinner than 100 nm.

In particular, in the case of the SPT head, it was found that the areal recording density largely decreased together with decrease in the film thickness of the soft-magnetic underlayer. In the case of a SPT head where there is no trailing shield, if the film thickness of the soft-magnetic underlayer becomes as small as 100 nm or less, the function of the flux return path from the main pole to the auxiliary pole decreases. This may be why there is a sharp decrease in the write-field intensity, the write-field gradient largely deteriorates and the magnetic field widens, so the track pitch density and linear recording density both largely deteriorate.

On the other hand, in the case of a WAS head or TS head, magnetic flux flows also to the trailing shield which is nearer than the auxiliary pole of the main pole, so even if the film thickness of the soft-magnetic underlayer is decreased, the write-field intensity at which the maximum magnetic field gradient is obtained, can be decreased without changing the effective write-field intensity and the write-field gradient by too much. As a result, by combining the head with a perpendicular magnetic recording medium which satisfies Relations (3-2), (3-3), the switching field distribution of the total recording layer decreases, matching can be obtained between the switching field intensity of the recording layer and the write-field intensity at which the shielded pole head shows the maximum magnetic field gradient, and a sharp recording pattern is formed in a narrow track width. As a result, a higher recording density than in the prior art where the soft-magnetic underlayer is as thick as 100 nm, can be realized. In addition to the magnetic head having the cross-sectional structure shown in FIG. 2, an identical effect is obtained by combining with the magnetic heads shown in FIG. 9(a)-FIG.9(e). As the read element 21 of FIG. 2 and FIG.9(a)-FIG.9(e), in addition to a giant magnetoresistive element, a tunneling magnetoresistive element may also be used.

On the other hand, in the case of a RING head, it appears that since the perpendicular magnetic field gradient is originally not so high, the linear recording density is much lower compared with a WAS head or TS head, so the areal recording density is also low.

As an example of the perpendicular magnetic recording media in Embodiment 1, FIG. 23 shows the areal recording densities of a magnetic recording device incorporating samples without the soft-magnetic underlayer 43. As is clear from FIG. 23, it is seen that with combinations of a RING head which was used for longitudinal magnetic recording media or an SPT head which was used for perpendicular magnetic recording media in the prior art, the areal recording density is very poor. Consequently, it is important to use a shielded pole head whose writer has a conventional single pole type writer structure without a shield and, in addition, has the magnetic shield formed via a nonmagnetic gap layer so as to cover at least the down-track direction of trailing side of the main pole.

**Claims**

1. A magnetic storage device comprising:

   a magnetic recording medium, a medium driver which drives said magnetic recording medium, a magnetic head provided with a writer and a reader, a head actuator which drives said magnetic head relative to said magnetic recording medium, and a signal processing unit which processes an input signal and output signal to and from said magnetic head, wherein:

   the writer of said magnetic head has a main pole, an auxiliary pole and a magnetic shield formed on at least the trailing side of said main pole via a nonmagnetic gap layer in order to increase the write-field gradient;
   said magnetic recording medium is a perpendicular magnetic recording medium having a soft-magnetic underlayer, an underlayer to control crystallographic texture and to promote segregation formed on said soft-magnetic underlayer, a first recording layer consisting of ferromagnetic crystal grains which have Co as principal component and contain Cr and Pt and consisting of grain boundaries containing oxides formed on said underlayer to control the crystallographic texture and to promote the segregation , and a second recording layer of an alloy having Co as principal component, containing Cr but not containing an oxide formed on said first recording layer; and

the saturation magnetization Ms1 (kA/m) of said first recording layer, saturation magnetization Ms2 (kA/m) of said second recording layer and the film thickness ts (nm) of said soft-magnetic underlayer (nm) satisfy the following relation:

$$20+0.033*ts2+2.3*ts \leq 4/3*Ms1-Ms2 \leq 329-0.024*ts2+1.9*ts$$

2. A magnetic storage device comprising:

a magnetic recording medium, a medium driver which drives said magnetic recording medium, a magnetic head provided with a writer and a reader, a head actuator which drives said magnetic head relative to said magnetic recording medium, and a signal processing unit which processes an input signal and output signal to and from said magnetic head, wherein:

the writer of said magnetic head has a main pole, an auxiliary pole and a magnetic shield formed on at least the trailing side of said main pole via a nonmagnetic gap layer in order to increase the write-field gradient;
said magnetic recording medium is a perpendicular magnetic recording medium not containing a soft-magnetic underlayer, and having an underlayer to control crystallographic texture and to promote segregation, a first recording layer consisting of ferromagnetic crystal grains which have Co as principal component and containins Cr and Pt and consisting of grain boundaries containing oxides formed on said underlayer to control the crystallographic texture and to promote the segregation, and a second recording layer of an alloy having Co as principal component, containing Cr but not containing an oxide formed on said first recording layer; and
the saturation magnetization Ms1 (kA/m) of said first recording layer and the saturation magnetization Ms2 (kA/m) of said second recording layer satisfy the following relation:

$$20 \leq 4/3*Ms1-Ms2 \leq 329$$

3. A magnetic storage device comprising:

a magnetic recording medium, a medium driver which drives said magnetic recording medium, a magnetic head provided with a writer and a reader, a head actuator which drives said magnetic head relative to said magnetic recording medium, and a signal processing unit which processes an input signal and output signal to and from said magnetic head, wherein:

the writer of said magnetic head has a main pole, an auxiliary pole and a magnetic shield formed on at least the trailing side of said main pole via a nonmagnetic gap layer in order to increase the write-field gradient;
said magnetic recording medium is a perpendicular magnetic recording medium having a soft-magnetic underlayer, an underlayer to control crystallographic texture and to promote segregation formed on said soft-magnetic underlayer, a first recording layer consisting of ferromagnetic crystal grains which have Co as principal component and contain Cr and Pt and consisting of grain boundaries containing oxides formed on said underlayer to control the crystallographic texture and to promote the segregation, and a second recording layer of an alloy having Co as principal component, containing Cr but not containing an oxide formed on said first recording layer; and
the Cr concentration C1 (at.%) relative to the total amount of Co, Cr and Pt contained in said first recording layer, the Cr concentration C2 (at.%) relative to the total amount of Co, Cr and Pt when Pt is contained in said second recording layer, and the film thickness ts (nm) of said soft-magnetic underlayer, satisfy the following relation:

$$-1.0+0.00084*ts2+0.059*ts \le C2-1.02*C1 \le 6.9-0.00061*ts2+0.049*ts$$

4. A magnetic storage device comprising:

a magnetic recording medium, a medium driver which drives said magnetic recording medium, a magnetic head provided with a writer and a reader, a head actuator which drives said magnetic head relative to said magnetic recording medium, and a signal processing unit which processes an input signal and output signal to and from said magnetic head, wherein:

the writer of said magnetic head has a main pole, an auxiliary pole and a magnetic shield formed on at least the trailing side of said main pole via a nonmagnetic gap layer in order to increase the write-field gradient;

said magnetic recording medium is a perpendicular magnetic recording medium not containing a soft-magnetic underlayer, and containing an underlayer to control crystallographic texture and to promote segregation, a first recording layer consisting of ferromagnetic crystal grains which have Co as principal component and contain Cr and Pt and consisting of grain boundaries containing oxides formed on said underlayer to control the crystallographic texture and to promote the segregation, and a second recording layer of an alloy having Co as principal component, containing Cr but not containing an oxide formed on said first recording layer; and

the Cr concentration C1 (at.%) relative to the total amount of Co, Cr and Pt contained in said first recording layer, and the Cr concentration C2 (at.%) relative to the total amount of Co, Cr and Pt when Pt is contained in said second recording layer, satisfy the following relation:

$$-1.0 \le C2-1.02*C1 \le 6.9$$

# Fig.1

(a)

(b)

# Fig.2

# Fig.3

# Fig.4

47 : protective layer, overcoat
46 : second recording layer
45 : first recording layer
44 : underlayer which controls the crystal texture (of upper layer) and promotes the segregation (of upper layer)
43 : soft-magnetic underlayer
underlayer
42 : adhesion layer
41 : substrate

# Fig.5

## Fig.6

## Fig.7(a)

# Fig.7 (b)

# Fig.7 (c)

# Fig.8

Y-axis: saturation magnetization of second recording layer Ms2 (kA/m)

X-axis: thickness of soft-magnetic underlayer ts (nm)

Legend:
— upper limit of Ms2
━ lower limit of Ms2
○ equal to or more than 23.3 Gbit/cm2
× equal to or less than 23.3 Gbit/cm2

# Fig.9 (a)

leading side

trailing side

substrate side

# Fig.9(b)

# Fig.9(c)

# Fig.9(d)

# Fig.9(e)

## Fig.10

## Fig.11

# Fig.12(a)

# Fig.12(b)

# Fig.12(c)

# Fig.13

## Fig.14

## Fig.15(b)

# Fig.16(a)

thickness of soft-magnetic underlayer

—×— 0nm
—△— 10nm
—□— 20nm
—■— 30nm
—◆— 40nm
—✳— 50nm
—+— 60nm
—○— 80nm
——— 100nm

# Fig.16(b)

thickness of soft-magnetic underlayer

—×— 0nm
—△— 10nm
—□— 20nm
—■— 30nm
—◆— 40nm
—✳— 50nm
—+— 60nm
—○— 80nm
——— 100nm

# Fig.16(c)

thickness of soft-magnetic
underlayer

—✕— 0nm

—△— 10nm

—□— 20nm

—■— 30nm

—◆— 40nm

—✱— 50nm

—＋— 60nm

—○— 80nm

——— 100nm

# Fig.17

—— upper limit of Ms2

—— lower limit of Ms2

○ equal to or more than 23.3Gbit/cm2

✕ equal to or less than 23.3Gbit/cm2

38

## Fig.18

## Fig.19

# Fig.20

# Fig.21

## Fig.22

lower limit
upper limit
O passed for operation test at 23.3 Gbit/cm2
× not passsed for operation test at 23.3 Gbit/cm2

C2-1.02*C1 (at.%)

thickness of soft-magnetic underlayer (nm)

## Fig.23

WAS head
TS head
SPT head
Ring head

areal recording density (Gbit/cm$^2$)

saturation magnetization of second recording layer (kA/m)

41

**European Patent Office**

## EUROPEAN SEARCH REPORT

Application Number

EP 06 02 7124

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/158585 A1 (TAKAHASHI ET AL.) 21 July 2005 (2005-07-21) * paragraphs [0018], [0078], [0097], [0101] - [0106]; claim 6; figures 1,11 * | 1-4 | INV. G11B5/66 G11B5/00 G11B5/127 |
| Y | WO 2004/090874 A (TOSHIBA) 21 October 2004 (2004-10-21) * page 4, line 10 - line 13 * * page 8, line 18 - line 25 * * page 10, line 26 - page 11, line 2 * * page 17, line 3 - line 24 * * page 19, line 3 - line 17 * * page 21, line 26 - page 22, line 2 * * page 27, line 3 - line 5 * * page 34, line 12 - page 35 * * page 41; example 36 * * page 42; tables 2-II * * figures 1,11 * | 1-4 | |
| D | & JP 2004 310910 A 4 November 2004 (2004-11-04) | | |
| Y | US 2005/153169 A1 (WATANABE ET AL.) 14 July 2005 (2005-07-14) * paragraphs [0003], [0022], [0042], [0075], [0077]; figure 1 * | 2,4 | TECHNICAL FIELDS SEARCHED (IPC) G11B |
| A | US 2002/028355 A1 (NAKAMURA ET AL.) 7 March 2002 (2002-03-07) * paragraphs [0009], [0071], [0079], [0087], [0097], [0101], [0102]; claims 1,7; figure 1 * | 1-4 | |

-/--

| | | |
|---|---|---|
| The present search report has been drawn up for all claims | | |
| Place of search | Date of completion of the search | Examiner |
| The Hague | 15 March 2007 | Magrizo, Simeon |

EPO FORM 1503 03.82 (P04C01)

**European Patent Office**

Application Number

EP 06 02 7124

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | B. ACHARYA ET AL.: "Anisotropy enhanced dual magnetic layer media design for high-density perpendicular recording" IEEE TRANSACTIONS ON MAGNETICS., vol. 41, no. 10, October 2005 (2005-10), pages 3145-3147, XP011140836 IEEE SERVICE CENTER, NEW YORK, NY, US * the whole document * ----- | 1-4 | |

TECHNICAL FIELDS SEARCHED (IPC)

The present search report has been drawn up for all claims

| Place of search | Date of completion of the search | Examiner |
|---|---|---|
| The Hague | 15 March 2007 | Magrizo, Simeon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 06 02 7124

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2007

| Patent document cited in search report | | Publication date | Patent family member(s) | | Publication date |
|---|---|---|---|---|---|
| US 2005158585 | A1 | 21-07-2005 | WO<br>JP | 03083842 A1<br>2003288713 A | 09-10-2003<br>10-10-2003 |
| WO 2004090874 | A | 21-10-2004 | NONE | | |
| JP 2004310910 | A | 04-11-2004 | CN | 1802697 A | 12-07-2006 |
| US 2005153169 | A1 | 14-07-2005 | JP<br>SG | 2005196898 A<br>113516 A1 | 21-07-2005<br>29-08-2005 |
| US 2002028355 | A1 | 07-03-2002 | SG | 91343 A1 | 17-09-2002 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002342908 A
- JP 2004310910 A
- US 20020176214 A1
- JP 2005190518 A

**Non-patent literature cited in the description**

- *IEEE Transactions on Magnetics,* July 2004, vol. 40 (4), 2498-2500
- Anisotropy Enhanced Dual Magnetic Layer Medium Design for High-Density Perpendicular Recording. *IEEE Transactions on Magnetics,* October 2005, vol. 41 (10), 3145-3147